# EUROPÄISCHE PATENTSCHRIFT

(11) **EP 2 126 607 B1**
(45) Veröffentlichungstag und Bekanntmachung des Hinweises auf die Patenterteilung: **09.01.2013**
(21) Anmeldenummer: 07846916.0
(22) Anmeldetag: 30.11.2007
(51) Int. Cl.: G01S 17/32

(54) **UMFELDSENSOR ZUR DETEKTION VON OBJEKTEN UND BETRIEBSVERFAHREN HIERFÜR**
ENVIRONMENT SENSOR FOR DETECTING OBJECTS AND METHOD FOR OPERATING THE SAME
DÉTECTEUR DE CHAMP DESTINÉ À DÉTECTER DES OBJETS ET PROCÉDÉ D'UTILISATION DE CELUI-CI

(30) Priorität: 26.01.2007 DE 102007004973
(43) Veröffentlichungstag der Anmeldung: 02.12.2009
(73) Patentinhaber: Valeo Schalter und Sensoren GmbH, 74321 Bietigheim-Bissingen (DE)
(72) Erfinder: SCHULER, Thomas, 75446 Wiernsheim (DE); MATHES, Joachim, 74080 Heilbronn (DE)
(86) Internationale Anmeldenummer: PCT/EP2007/010391
(87) Internationale Veröffentlichungsnummer: WO 2008/089806

(56) Entgegenhaltungen:
- CA-A1- 2 077 596
- DE-A1- 10 057 392
- DE-A1-102004 002 936
- US-A- 4 274 736
- US-A- 4 694 295
- US-A- 6 115 114
- US-B1- 6 377 167

## Beschreibung

Die Erfindung betrifft einen Umfeldsensor, insbesondere für ein Kraftfahrzeug, zur Detektion von Objekten, insbesondere in der Umgebung des Kraftfahrzeugs.

Die Erfindung betrifft ferner ein Betriebsverfahren für einen derartigen Umfeldsensor.

Umfeldsensoren der eingangs genannten Art sind bekannt und verwenden üblicherweise Ultraschall- oder auch Radarsignale, um in der Umgebung eines Kraftfahrzeugs befindliche Objekte zu erkennen.

Ein besonderer Nachteil der herkömmlichen, ultraschallbasierten Sensoren ist deren geringe räumliche Auflösung und ihre verhältnismäßig kleine Reichweite, so dass sich die Anwendungsfelder von Ultraschallsensoren in dem Kraftfahrzeugbereich im wesentlichen auf Einparkhilfesysteme beschränken, bei denen keine besonders hohe räumliche Auflösung gefordert ist und typische Detektionsreichweiten allenfalls im Bereich von einigen zehn Zentimetern bis einigen Metern liegen.

Radarsysteme werden ebenfalls im Kraftfahrzeugbereich eingesetzt, erfordern jedoch eine komplexe Signalverarbeitung und insbesondere zur Realisierung einer verhältnismäßig großen räumlichen Auflösung bzw. einer entsprechend schmalen Richtcharakteristik ("Keule") einen erhöhten Aufwand bei der Bereitstellung entsprechender Antennen bzw. Antennensysteme wie z.B. phasengesteuerten Antennen (phased array).

Ein Umfeldsensor der vorstehend genannten Art ist aus dem US 6377167 bekannt.

Demgemäß ist es Aufgabe der vorliegenden Erfindung, einen Umfeldsensor der eingangs genannten Art dahingehend zu verbessern, dass eine hohe räumliche Auflösung sowie ein großer Detektionsbereich erzielt wird, ohne gleichzeitig den Auswertungsaufwand wesentlich zu erhöhen.

Diese Aufgabe wird bei dem Umfeldsensor der eingangs genannten Art erfindungsgemäß dadurch gelöst, dass mindestens eine optische Sensorvorrichtung vorgesehen ist, die ausgebildet ist, einen vorgebbaren Raumbereich mit mindestens einem ersten optischen Sendesignal zu beaufschlagen, und durch eine Auswerteeinheit, die ausgebildet ist, ein in dem Raumbereich, insbesondere an einem zu detektierenden Objekt reflektiertes erstes Empfangssignal und ein über eine Referenz übertragungsstrecke zu sendendes Referenzsignal zu analysieren, um auf das Vorhandensein des Objekts zu schließen.

Die erfindungsgemäße Verwendung eines optischen Signals zur Detektion von Objekten bzw. Hindernissen bietet vorteilhaft eine wesentlich größere räumliche Auflösung als die herkömmlichen auf Ultraschall- und/oder Radarsignalen basierenden Sensoren und gleichzeitig auch einen größeren Bereich hinsichtlich der Detektionsreichweite. Gleichzeitig ist durch den erfindungsgemäßen Einsatz eines Referenzsignals und dessen Auswertung zusammen mit dem Empfangssignal eine effiziente Möglichkeit zur Auswertung von Umfeldinformationen gegeben.

Bei einer sehr vorteilhaften erfindungsgemäßen Konfiguration weist die Sensorvorrichtung die folgenden Komponenten auf:
- einen Sender zum Senden des mindestens einen ersten optischen Sendesignals mit einer vorgebbaren ersten Signalform über eine erste Übertragungsstrecke, wobei die erste Übertragungsstrecke zumindest teilweise im Freiraum, insbesondere zwischen dem Umfeldsensor bzw. dem Sender und einem zu detektierenden Objekt, verläuft,
- einen Empfänger zum Empfangen des Empfangssignals an einem Ausgang der ersten Übertragungsstrecke,
- einen Referenzsender zum Senden mindestens eines ersten Referenzsignals mit einer vorgebbaren Referenzsignalform über eine Referenzübertragungsstrecke, wobei die Referenzübertragungsstrecke eine bekannte Übertragungsfunktion aufweist,
- einen Empfänger zum Empfangen eines ersten Referenzempfangssignals an einem Ausgang der Referenzübertragungsstrecke, wobei das erste Sendesignal und das Referenzsignal jeweils von Null verschiedene Frequenzanteile aufweisen, und sich die Zeitfunktionen der Signale zumindest über einen vorgebbaren Zeitbereich hinweg zu einem Gleichsignal addieren.

Die erfindungsgemäße erste optische Übertragungsstrecke zur Übermittlung des ersten Sendesignals stellt insbesondere bei der Auswahl einer für Menschen nicht sichtbaren Wellenlänge für das Sendesignal keine Beeinträchtigung eines Fahrers des Kraftfahrzeugs oder anderer Personen in dem untersuchten Umfeld dar, und die Wahl der Signalform für das Sendesignal und das Referenzsignal ermöglicht vorteilhaft eine besonders einfache Auswertung.

Im Gegensatz zu dem ersten Sendesignal muss es sich bei dem Referenzsignal nicht um ein optisches Signal handeln; vielmehr kann das Referenzsignal bzw. das Referenzempfangssignal als elektrisches Signal ausgebildet sein und zusammen mit einem elektrischen Empfangssignal analysiert werden, das am Ausgang eines als Photodiode ausgebildeten Empfängers erhalten wird.

Eine besonders effiziente Analyse des Empfangssignals und des Referenzsignals bzw. des hiervon abhängigen Referenzempfangssignals ergibt sich erfindungsgemäß dadurch, dass die Auswerteeinheit dazu ausgebildet ist:
- das erste Empfangssignal mit einem aus der Refenz übertragubgsstrecke erhaltenen Referenzempfangssignal zu Addieren oder zu Multiplizieren, um ein Summensignal zu erhalten,
- vorgebbare Zeitbereiche des Summensignals auszuwerten, um auf eine Reflexion und/oder Dämpfung und/oder Phasenverschiebung des Sendesignals zu schließen, und
- aus der Reflexion und/oder Dämpfung und/oder Phasenverschiebung auf einen Abstand und/oder eine Beschaffenheit des Objekts rückzuschließen.

In einem ausgeregelten Zustand der erfindungsgemäßen Sensorvorrichtung addieren sich die Zeitfunktionen des Sendesignals und des Referenzsignals vorteilhaft zumindest über einen vorgebbaren Zeitbereich hinweg zu einem Gleichsignal. Aufgrund der unterschiedlichen Signalwege ergeben sich jedoch insbesondere bei dem optischen Sendesignal eine von den Reflexionseigenschaften und dem Abstand des zu untersuchenden Bereichs, abhängige Dämpfung und/oder Phasenverschiebung im Bezug auf das Referenzsignal, die erfindungsgemäß ausgewertet werden, um auf das Vorhandensein bzw. die Entfernung zu einem Objekt wie z.B. einem Hindernis zu schließen.

D.h., anhand einer Abweichung des erfindungsgemäß gebildeten Summensignals von einem Gleichsignal kann vorteilhaft auf das Vorhandensein eines Objekts und dessen Abstand zu dem erfindungsgemäßen Umfeldsensor geschlossen werden.

Besonders vorteilhaft kann eine zeitliche Änderung des erfindungsgemäß ermittelten Abstands des Umfeldsensors zu einem detektierten Objekt z.B. mit einer Momentangeschwindigkeit des Kraftfahrzeugs verglichen werden, wobei unter Kenntnis der Geometrie des Umfeldsensors bzw. des beobachteten Raumbereichs und der Fahrtrichtung z.B. eine Plausibilisierung der betrachteten Informationen möglich ist.

Insbesondere bei solchen Sensorvorrichtungen, deren Übertragungsstrecken sich im wesentlichen etwa senkrecht zu einer Ebene der Windschutzscheibe erstrecken, oder die ganz allgemein z.B. zur Erkennung von eine Durchfahrtshöhe beschränkenden Objekten wie z.B. herabhängenden Ästen oder Tunneleinfahrten ausgebildet sind und bei einer Fahrt auf freier Fläche dementsprechend mangels Reflexionen bzw. reflektierenden Objekten kein Empfangssignal erhalten, kann erfindungsgemäß vorteilhaft auch eine Auswertung vorgenommen werden, die das Auftreten von Niederschlag oder Aerosolen anzeigt. Sobald nämlich Regentropfen in die ansonsten (reflexions-)freie Übertragungsstrecke eintreten, ergibt sich ein Empfangssignal, das sich aus den an den Regentropfen reflektierten Anteilen des Sendesignals zusammensetzt und dementsprechend besondere statistische Eigenschaften aufweist, die bei der Auswertung beispielsweise zu sich ständig ändernden Abstandswerten führen. Aus einem derartigen Zeitverhalten der erfindungsgemäß ermittelten Abstandswerte kann demnach vorteilhaft auf Niederschlag geschlossen werden, während z.B. im wesentlichen zeitlich konstante Abstandswerte auf eine verringerte Durchfahrtshöhe - wie sie z.B. in einem Tunnel gegeben ist - hinweisen.

Besonders geringe Störungen der Freiraum-Übertragungsstrecke, die jedoch bereits zu einer Abweichung von dem beschriebenen ausgeregelten Zustand führen können, werden erfindungsgemäß vorteilhaft dadurch erkannt, dass die Auswerteeinheit ausgebildet ist, das Summensignal über mehrere vorgebbare Zeitbereiche zu addieren bzw. zu integrieren. Je nach der Anzahl der Integrationszyklen können auf diese Weise insbesondere auch geringste Phasenverschiebungen zwischen dem Empfangssignal und dem Referenzempfangssignal erkannt werden, so dass u.a. auch die Länge.der optischen Übertragungsstrecke des ersten Sendesignals aufgrund von Laufzeiteffekten und damit auch der Abstand des Umfeldsensors von dem untersuchten bzw. reflektierenden Objekt präzise ermittelt werden kann.

Besonders vorteilhaft werden erfindungsgemäβ jeweils unterschiedliche Zeitbereiche des Summensignals ausgewertet, um auf die Dämpfung und/oder Phasenverschiebung des Sendesignals zu schließen, wodurch in Abhängigkeit der gewählten Signalformen jeweils diejenigen Bereiche auswertbar sind, die bezüglich der zu untersuchenden Eigenschaft die größte Empfindlichkeit aufweisen. Dementsprechend können bei Rechtecksignalen insbesondere die den Zustandswechseln entsprechenden Zeitbereiche untersucht werden, um Informationen über eine Phasenverschiebung zu erhalten, während mit der Dämpfung bzw. Reflexion korrespondierende Amplitudeninformationen auch aus den anderen Zeitbereichen der betreffenden Signale bzw. des Summensignals erhalten werden können.

Besonders vorteilhaft ist erfindungsgemäß mindestens eine steuerbare Mikrospiegelanordnung vorgesehen, um den Strahlengang des Sendesignals und/oder des Empfangssignals und/oder des Referenzsignals - im Falle eines ebenfalls optischen Referenzsignals - zu beeinflussen. Dadurch ist es beispielsweise möglich, das Sendesignal abwechselnd auf mehrere Bereiche des zu untersuchenden Umfelds oder generell auf völlig verschiedene Raumbereiche auszurichten und dementsprechend mit nur einem erfindungsgemäßen Umfeldsensor bzw. einer darin enthaltenen Sensorvorrichtung eine Vielzahl von Bereichen zu überwachen.

Über dem Fachmann bekannte optische Strahlteiler oder mehrere Facetten aufweisende Reflektoren ist es darüberhinaus vorteilhaft möglich, ein einziges hinsichtlich des beaufschlagten Raumbereichs "statisches" Sendesignal auf mehrere Winkel- bzw. Raumbereiche aufzuteilen. Hierbei sind entsprechend viele Empfänger bzw. Auswerteeinheiten vorzusehen, um die mehreren Sendesignale bzw. deren Reflexionen aus den unterschiedlichen Raumbereichen zu

empfangen und zu analysieren, wobei der Analyse vorteilhaft jeweils dasselbe Referenzsignal zugrunde liegen kann. Ein besonderer Vorteil der Strahlteiler bzw. facettierten Reflektoren besteht darin, dass sie keine beweglichen Teile aufweisen und dementsprechend robust sind.

Der erfindungsgemäße Umfeldsensor kann darüberhinaus vorteilhaft mindestens eine Fokussieroptik aufweisen, um das Sendesignal - oder auch ein bereits reflektiertes Empfangssignal - auf einen zu untersuchenden Raumbereich bzw. einen entsprechenden Empfänger zu fokussieren. Die Fokussieroptik ist besonders vorteilhaft zusammen mit einer ggf. vorgesehenen Mikrospiegelanordnung oder einem Strahlteiler bzw. Reflektor in ein gemeinsames Optikmodul integrierbar.

Zur Erzeugung des Sendesignals und/oder des Referenzsignals werden bevorzugt Leuchtdioden und/oder Laserdioden eingesetzt, wobei insbesondere oberflächenemittierende Diodenlaser, VCSEL (vertical cavity surface emitting laser) zum Einsatz kommen.

Erfindungsgemäß kann besonders vorteilhaft vorgesehen sein, dass eine zur Übertragung des Sendesignals vorgesehene Übertragungsstrecke so ausgebildet ist, dass sie mindestens einen, vorzugsweise jedoch mehrere Winkelbereiche in einer Ebene umfasst, die parallel zur Horizontalen, insbesondere einer Fahrbahn oder dergleichen, und/oder im wesentlichen senkrecht zur Horizontalen, angeordnet ist. Eine derartige Anordnung der Übertragungsstrecken ermöglicht eine umfassende Objekterkennung um das gesamte Kraftfahrzeug herum bzw. zumindest in einem Halbraum, der durch die Anordnung des erfindungsgemäßen Umfeldsensors an dem Kraftfahrzeug definiert ist.

Beispielsweise ermöglicht die Anordnung einer oder mehrerer Übertragungsstrecken parallel zu einer Fahrbahn entlang einer Seitenfläche des Kraftfahrzeugs vorteilhaft die Erkennung von Hindernissen bzw. freien Bereichen und bei entsprechender Auswertung somit auch die Erkennung von Parklücken.

Durch die Auswertung einer oder mehrerer in einer Ebene senkrecht zur Horizontalen angeordneter Übertragungsstrecken ist vorteilhaft die Erkennung von Hindernissen möglich, die eine Durchfahrtshöhe begrenzen, beispielsweise eine Tunneleinfahrt oder dergleichen, was insbesondere für Nutzfahrzeuge von Bedeutung ist.

Eine Kombination der vorstehend beschriebenen Übertragungsstrecken bzw. der Auswertung von Abstandswerten, die für diese Übertragungsstrecken ermittelt werden, erlaubt vorteilhaft die Bestimmung eines Fahrkorridors des Kraftfahrzeugs und ermöglicht eine frühzeitige und präzise Information des Fahrers über mögliche Hindernisse.

Auch bei der Anwendung des erfindungsgemäßen Prinzips zur Parklückenerkennung bietet sich eine Kombination von mehreren Übertragungsstrecken an, so dass neben die Parklücke begrenzenden Hindernissen wie z.B. weiteren Fahrzeugen insbesondere auch die Erkennung einer Bordsteinkante ermöglicht wird.

Neben einer gleichzeitigen Realisierung der verschiedenen Übertragungsstrecken durch mehrere Sender/Empfänger bzw. Sensorvorrichtungen ist vorteilhaft auch ein Betrieb mehrerer Übertragungsstrecken im Zeitmultiplex möglich, wobei der Strahlengang des Sendesignals z.B. durch entsprechende steuerbare Mikrospiegelanordnungen, Drehspiegel oder dergleichen entsprechend beeinflusst werden kann.

Erfindungsgemäß kann weiter besonders vorteilhaft vorgesehen sein, dass die zur Übertragung des Sendesignals vorgesehene Übertragungsstrecke so ausgebildet ist, dass sie mindestens einen, vorzugsweise jedoch mehrere Winkelbereiche in einer Ebene umfasst, die im wesentlichen parallel zu einer Fahrzeugflanke und/oder einer Fahrzeugtür des Kraftfahrzeugs angeordnet ist. Eine derartige Konfiguration des erfindungsgemäßen Umfeldsensors kann beispielsweise vorteilhaft in einem seitlich angebrachten Blinker oder auch in einem Außenspiegel des Kraftfahrzeugs angeordnet sein, der fest mit der Fahrzeugtür verbunden ist. Diese Erfindungsvariante erlaubt eine Überwachung der Fahrzeugtür auf mögliche Kollisionen mit seitlich des Fahrzeugs angeordneten Hindernissen wie z.B. benachbart angeordneten Fahrzeugen oder Betonpfeilern in einem Parkhaus oder dergleichen und kann vorteilhaft dazu eingesetzt werden, eine entsprechende Verriegelung oder ein Antriebssystem für die Fahrzeugtür anzusteuern, um eine Kollision der Fahrzeugtür mit dem Hindernis zu vermeiden.

Neben einer Überwachung des Umfelds eines Kraftfahrzeugs ermöglicht der erfindungsgemäße Umfeldsensor auch die Überwachung eines Innen- bzw. Laderaums des Kraftfahrzeugs, wobei mindestens eine Übertragungsstrecke zumindest zeitweise so anzuordnen ist, dass sie sich zumindest teilweise in dem zu überwachenden Innen- bzw. Laderaum erstreckt.

Besonders vorteilhaft ist der erfindungsgemäße Umfeldsensor in eine Komponente des Kraftfahrzeugs integrierbar, insbesondere in eine Dachbedieneinheit und/oder die A-/B-/C-Säule und/oder eine Leuchte, insbesondere eine Rückleuchte bzw. einen Scheinwerfer, und/oder in ein Regensensormodul, und/oder in einen Seiten- bzw. Außenspiegel und/oder in einen Blinker und/oder in einen Innenspiegel und/oder in einen Stoßfänger.

Insbesondere bei der Integration des Umfeldsensors in ein Regensensormodul ist ggf. eine Mehrfachnutzung der Komponenten der beiden Systeme möglich. Beispielsweise kann eine einzige Lichtquelle zur Erzeugung des Sendesignals unter Aufspaltung durch entsprechende Strahlteiler gleichzeitig den Regensensor und den erfindungsgemäßen Umfeldsensor versorgen.

Erfindungsgemäß kann die zur Übertragung des Sendesignals vorgesehene Übertragungsstrecke ferner so ausgebildet sein, dass sie einen Bereich einer Scheibe, insbesondere der Windschutzscheibe des Kraftfahrzeugs, und/oder einer Abdeckscheibe einer Leuchte umfasst. Durch den Einsatz einer entsprechenden Fokussieroptik und das abwechselnde Fokussieren auf die Scheibe bzw. einen Bereich im Umfeld des Kraftfahrzeugs ist es vorteilhaft möglich, mit denselben Komponenten einerseits eine Beaufschlagung der Scheibe mit Schmutz oder Regen zu erkennen und andererseits Objekte im Umfeld des Kraftfahrzugs.

Als eine weitere Lösung der Aufgabe der vorliegenden Erfindung ist ein Verfahren zum Betreiben eines Umfeldsensors gemäß Patentanspruch 16 angegeben.

Eine besonders vorteilhafte Ausführungsform des erfindungsgemäßen Verfahrens sieht die Verwendung sinusförmiger oder rechteckförmiger Signale vor, wobei das erste Sendesignal eine vorgebbare Phasenverschiebung, insbesondere 180 Grad, zu dem Referenzsignal aufweist.

Die Verwendung mehrerer Sendesignale, die z.B. auch unterschiedliche Wellenlängen aufweisen können, ist ebenfalls denkbar.

Besonders vorteilhaft kann bei dem erfindungsgemäßen Verfahren vorgesehen sein, dass in Abhängigkeit der Analyse eine Signalisierung erfolgt, beispielsweise um einem Fahrer das Auftreten eines Hindernisses oder auch die räumliche Nähe zu einer geeigneten Parklücke anzuzeigen.

Weitere Fahrerassistenzsysteme wie z.B. ein ultraschallbasiertes Einparkhilfesystem oder dergleichen können in Abhängigkeit der Analyse ebenfalls vorteilhaft aktiviert werden, z.B. um die erfindungsgemäß ermittelten Umfelddaten zu ergänzen oder zu plausibilisieren.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: ein Blockschaltbild einer optischen Sensorvorrichtung des erfindungsgemäßen Umfeldsensors,
- Figur 2: eine Detailansicht der Vorrichtung aus Figur 1,
- Figur 3a: einen Zeitverlauf eines erfindungsgemäß erhaltenen Empfangssignals,
- Figur 3b bis Figur 3d: jeweils einen schematischen Zeitverlauf von rechteckförmigen Sendesignalen und einem entsprechenden Empfangssignal,
- Figur 4: einen erfindungsgemäßen Umfeldsensor in einem ersten Szenario, bei dem das erfindungsgemäße Verfahren verwendet wird,
- Figur 5a: eine schematische Seitenansicht eines Nutzfahrzeugs mit dem erfindungsgemäßen Umfeldsensor,
- Figur 5b: eine schematische Draufsicht auf ein Kraftfahrzeug, bei dem der erfindungsgemäße Umfeldsensor in einem seitlich angeordneten Blinker integriert ist,
- Figur 6: eine Ausführungsform einer erfindungsgemäßen Signalerzeugungseinheit,
- Figur 7: optische Komponenten einer Ausführungsform der erfindungsgemäßen Vorrichtung,
- Figur 8: eine erfindungsgemäße Ansteuerschaltung zur Erzeugung eines optischen Signals,
- Figur 9: eine erfindungsgemäße Phasenschieber-Schaltung,
- Figur 10: eine Ausführungsform der Erfindung mit mehreren Übertragungsstrecken,
- Figur 11: einen zeitlichen Verlauf von für die Ausführungsform gemäß Figur 10 verwendeten Rechtecksignalen,
- Figur 12: eine schematische Darstellung einer erfindungsgemäßen Optik einschließlich einer Mikrospiegel-Anordnung,
- Figur 13a und 13b: jeweils eine weitere erfindungsgemäße Ausführungsform optischer Komponenten der Vorrichtung, und
- Figur 14: eine erfindungsgemäße Drehspiegelanordnung als Bestandteil einer optischen Übertragungsstrecke.

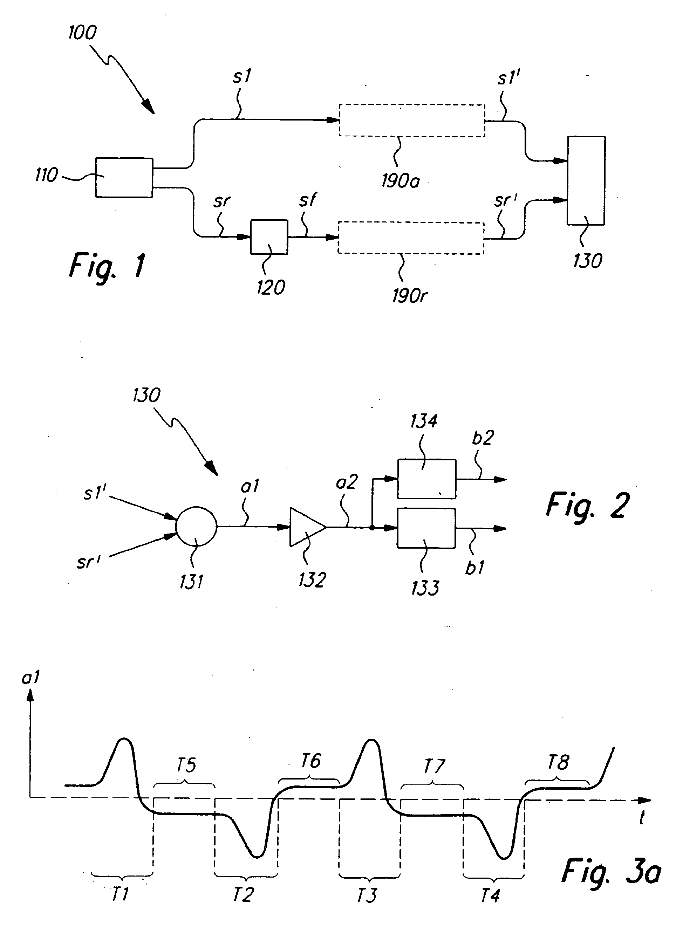

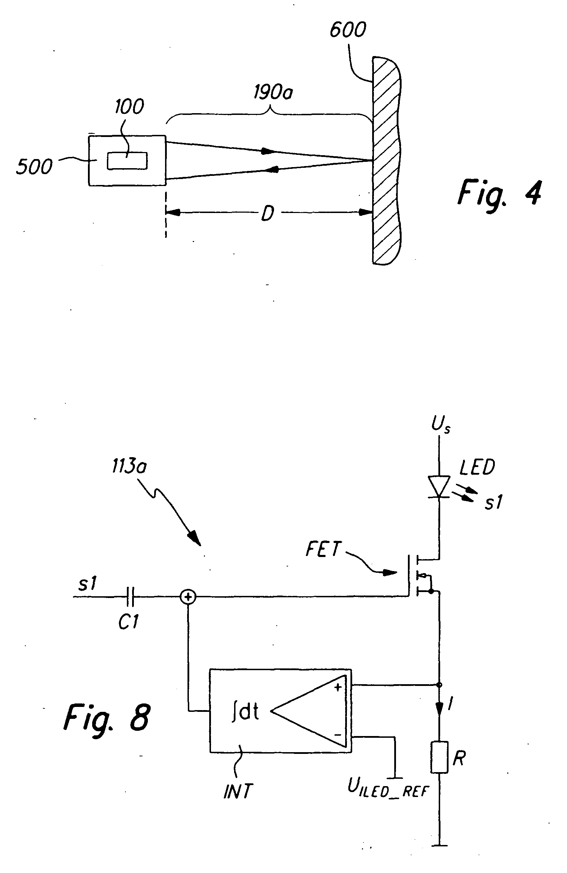

Figur 1 zeigt eine Ausführungsform einer optischen Sensorvorrichtung 100, wie sie in dem in Figur 4 abgebildeten erfindungsgemäßen Umfeldsensor 500 zur Detektion von Objekten insbesondere in der Umgebung eines Kraftfahrzeugs vorgesehen ist.

Die optische Sensorvorrichtung 100, deren Funktionsweise nachstehend näher beschrieben ist, ermöglicht vorteilhaft die Erkennung von Objekten bzw. die Ermittlung eines Abstands D, den ein betreffendes Objekt 600 von dem Umfeldsensor 500 bzw. der darin enthaltenen Sensorvorrichtung 100 aufweist. Im Gegensatz zu herkömmlichen Umfeldsensoren verwendet das erfindungsgemäße System optische Signale, wodurch - im Gegensatz zu ultraschall- oder radargestützten Systemen - einerseits eine besonders große räumliche Auflösung erzielt wird und im Zusammenhang mit dem nachstehend beschriebenen erfindungsgemäßen Auswertungsverfahren darüberhinaus auch ein weiter Detektionsbereich von einigen Millimetern bis einigen zehn Metern oder mehr nutzbar ist.

Der erfindungsgemäße Umfeldsensor 500 kann ohne Beeinträchtigung seiner Funktion beispielsweise in einer Dachbedieneinheit und/oder der A-/B-/C-Säule und/oder an bzw. in einem Rück- bzw. Außenspiegel des Kraftfahrzeugs, in einer Leuchte, z.B. einem Blinker, oder auch in einem Stoßfänger integriert werden. Prinzipiell sind für die Funktion des erfindungsgemäßen Umfeldsensors 500 alle Einbauorte geeignet, die eine Sichtverbindung bzw. die Ausbildung mindestens einer optischen Übertragungsstrecke zwischen dem erfindungsgemäßen Umfeldsensor 500 und dem zu überwachenden Umfeld des Kraftfahrzeugs bieten. Hierbei kommen auch solche Einbauorte in Frage, bei denen die Übertragungsstrecke bzw. Sichtverbindung mittels optischer Hilfsmittel wie z.B. Umlenkspiegel oder sonstiger Hilfsoptiken bzw. Lichtleiter etabliert wird.

Die optische Sensorvorrichtung 100 weist eine Signalerzeugungseinheit 110 (Figur 1) auf, die wie abgebildet ein erstes Sendesignal s1 und ein weiteres, auch als Referenzsignal bezeichnetes Signal sr erzeugt. Die Signale s1, sr sind zur Übertragung über ihnen entsprechend zugeordnete Übertragungsstrecken 190a, 190r vorgesehen.

Die erste Übertragungsstrecke 190a weist eine Übertragungsfunktion auf, die von einer zu erfassenden physikalischen Größe abhängt, beispielsweise von einem Abstand D (Figur 4) der Sensorvorrichtung 100 zu einem Objekt 600.

Bei der zu erfassenden physikalischen Größe kann es sich auch um das Reflexionsvermögen eines in dem interessierenden Bereich vorhandenen Objekts 600 selbst handeln.

Erfindungsgemäß ist die erste Übertragungsstrecke 190a vorteilhaft zumindest teilweise als optische Freiraum-Übertragungsstrecke ausgebildet, die einen Weg D zwischen dem Umfeldsensor 500 und dem interessierenden Objekt 600, vgl. Figur 4, und wieder zurück umfasst, und das Sendesignal s1 ist ein optisches Signal.

An dem Ausgang der ersten Übertragungsstrecke 190a wird ein erstes Empfangssignal s1' (Figur 1) erhalten, dessen Signalform (insbesondere Amplitude und/oder Phasenlage) von dem Abstand D des Objekts 600 und dessen Reflektivität abhängt.

Die zweite Übertragungsstrecke 190r ist als Referenzübertragungsstrecke vorgesehen und weist entsprechend eine bekannte Übertragungsfunktion auf, die insbesondere nicht von der zu erfassenden physikalischen Größe abhängt. Die Referenzübertragungsstrecke 190r kann erfindungsgemäß ebenfalls als optische Übertragungsstrecke ausgebildet sein; in diesem Fall ist das Referenzsignal sr auch ein optisches Signal. Alternativ kann die Referenzübertragungsstrecke 190r jedoch auch z.B. rein elektronisch realisiert werden, wobei als Referenzsignal sr dementsprechend ein elektronisches Signal verwendet wird.

An dem Ausgang der Referenzübertragungsstrecke 190r wird ein Referenzempfangssignal sr' erhalten, das aufgrund der bekannten Übertragungsfunktion der Referenzübertragungsstrecke 190r im Idealfall, d.h. unter Ausschluss von Alterungseffekten, Temperaturabhängigkeit usw. z.B. auch direkt aus dieser und dem Referenzsignal sr ermittelt werden könnte.

In dem die Referenzübertragungsstrecke 190r aufweisenden Referenzzweig der erfindungsgemäßen Sensorvorrichtung 100 sind wie aus Figur 1 ersichtlich zusätzlich vorzugsweise aktiv ausgebildete Filtermittel 120 vorgesehen, die eine Amplitude und/oder Phasenlage des Referenzsignals sr bezüglich des Sendesignals s1 beeinflussen können, wodurch an einem Ausgang der Filtermittel 120 ein gefiltertes Referenzsignal sf erhalten wird, das anstelle des ungefilterten Referenzsignals sr der Referenzübertragungsstrecke 190r zugeführt wird.

Bevorzugt weisen das Sendesignal s1 und das Referenzsignal sr bzw. das gefilterte Referenzsignal sf eine rechteckförmige Signalform auf, und die Signale s1, sr besitzen eine Phasenverschiebung-von 180 Grad zueinander, so dass sie sich bei gleichen Amplituden zu einem Gleichsignal ergänzen würden.

Das erste Sendesignal s1 wird in der ersten Übertragungsstrecke 190a jedoch in Abhängigkeit der zu erfassenden physikalischen Größe beeinflusst, insbesondere hinsichtlich seiner Amplitude und/oder seiner Phasenlage bezogen auf das Referenzsignal sr. Demnach enthalten die ausgangsseitig der Übertragungsstrecken 190a, 190r empfangenen Signale s1', sr' Informationen über die auszuwertende physikalische Größe, d.h. vorliegend über den Abstand D und/oder das Reflexionsvermögen eines Objekts 600.

Die Auswertung der ausgangsseitig der Übertragungsstrecken 190a, 190r (Figur 1) erhaltenen Empfangssignale s1', sr' erfolgt erfindungsgemäß in einer Auswerteeinheit 130, deren Funktion nachstehend unter Bezugnahme auf Figur 2 beschrieben ist.

Die Auswerteeinheit 130 weist eingangsseitig eine Addiereinheit 131 auf, der die Empfangssignale s1', sr' der beiden Übertragungsstrecken 190a, 190r zugeführt werden. An dem Ausgang der Addiereinheit 131 ergibt sich demzufolge ein Summensignal a1, das - bei identisch ausgebildeten Übertragungsstrecken 190a, 190r - aufgrund der erfindungsgemäßen Auswahl der Signale s1, sr einem Gleichsignal entspräche. Tatsächlich wird aufgrund der üblicherweise voneinander verschiedenen Übertragungsfunktionen der Übertragungsstrecken 190a, 190r ein von einem Gleichsignal abweichendes Summensignal a1 erhalten, das z.B. den in Figur 3a abgebildeten zeitlichen Verlauf aufweist und Informationen über den Abstand D oder sonstige die Übertragungsfunktion der Übertragungsstrecke 190a beeinflussende Effekte enthält.

Die Funktion der Addiereinheit 131 (Figur 2) wird vorliegend durch eine einzige, nicht abgebildete Fotodiode realisiert, die gleichzeitig vorteilhaft eine Umwandlung der optischen Empfangssignale s1', sr' in entsprechende elektrische Signale vornimmt. Der durch die Fotodiode in Reaktion auf die ihr zugeführten optischen Empfangssignale s1', sr' erhaltene Fotostrom entspricht demnach dem vorstehend beschriebenen Summensignal a1 (Figur 2).

In den in Figur 3a durch geschweifte Klammern markierten Zeitbereichen T1, T2, T3, T4 des Summensignals a1 sind deutlich Impulse erkennbar, die sich durch Laufzeiteffekte des Sendesignals s1 in der ersten Übertragungsstrecke 190a und der damit einhergehenden Phasenverschiebung ergeben. Die Phasenverschiebung ist proportional zu dem Abstand D zwischen dem Umfeldsensor 500 und dem Objekt 600, so dass aus der Phasenverschiebung der Abstand D ermittelt werden kann. Die Maximierung der Empfindlichkeit des erfindungsgemäßen Verfahrens bezüglich Phasenverschiebungen ist weiter unten detailliert beschrieben.

Das Summensignal a1 wird neben einer geeigneten Verstärkung durch den der Fotodiode 131 nachgeordneten Verstärker 132 (Figur 2) bevorzugt nur in den Zeitbereichen T1, T2, T3, T4 ausgewertet, um Informationen über die Phasendifferenz zu erhalten, weil insbesondere diese Zeitbereiche T1, T2, T3, T4 bei den verwendeten rechteckförmigen Sendesignalen s1, sr die interessierende Information bezüglich der Phasendifferenz aufweisen.

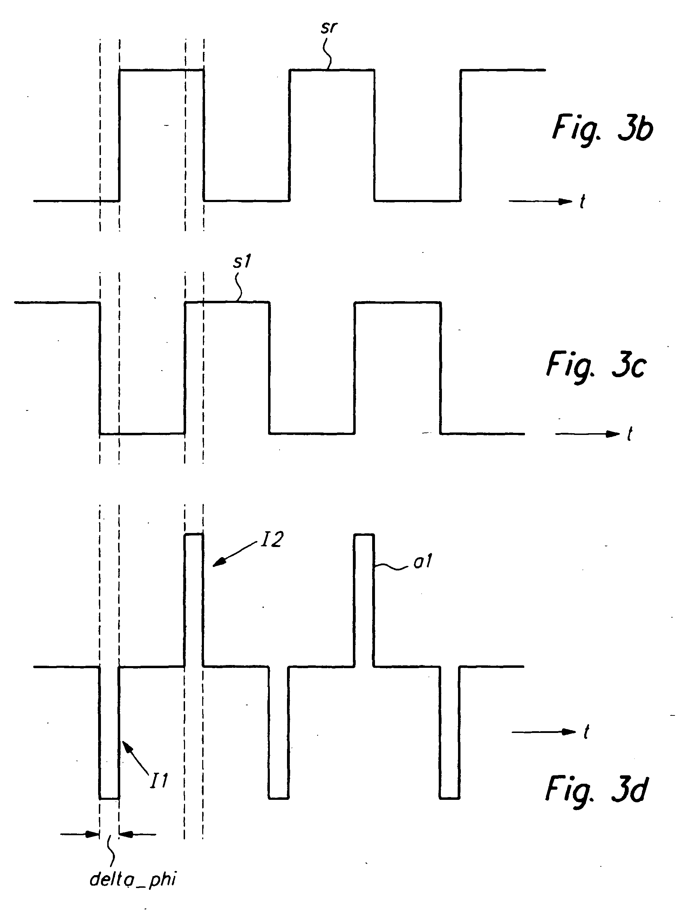

Die Figuren 3b bis 3c zeigen hierzu jeweils schematisch zwei rechteckförmige Signale, wobei in Figur 3b z.B. das an dem Ausgang der Referenzübertragungsstrecke 190r (Figur 1) erhaltene Referenzempfangssignal sr' und in Figur 3c das an dem Ausgang der Übertragungsstrecke 190a (Figur 1) erhaltene Empfangssignal s1' abgebildet ist. Die Amplituden der betrachteten Signale sr, s1 interessieren vorliegend nicht und werden daher als gleich groß angenommen. Dementsprechend kompensieren sich die beiden Signale sr', s1' nahezu zu einem zeitlich konstanten Summensignal a1, vgl. Figur 3d, wobei sich jedoch aufgrund der Laufzeitunterschiede der Signale s1, sr in den unterschiedlichen Übertragungsstrecken 190a, 190r die in Figur 3d mit den Bezugszeichen I1, I2, .. angedeuteten Impulse ergeben, deren Breite von der laufzeitbedingten Phasendifferenz delta_phi der Signale sr, s1 bzw. s1', sr' abhängt.

Verschiedene, dem Fachmann bekannte Effekte wie z.B. ein Tiefpassverhalten beteiligter Komponenten führen sowohl innerhalb der Übertragungsstrecken 190a, 190r als auch z.B. in der Fotodiode 131 und dem Verstärker 132 zu einem "Verschleifen" der in den Figuren 3b bis 3d dargestellten idealen Rechtecksignale, so dass sich für die Impulse I1, I2, .. bei einem realen System die in Figur 3a in den Zeitbereichen T1, T2, .. angegebene Signalform ergibt.

Aufgrund der großen Lichtgeschwindigkeit kann die Impulsbreite der entsprechenden Impulse bei geringen Abständen D von z.B. wenigen Dezimetern oder weniger Werte im Nanosekundenbereich annehmen.

Um eine entsprechend schnelle Auswertung und eine dementsprechend erforderliche Verwendung hinreichend schneller Bauelemente in der Sensorvorrichtung 100 bzw. in der Auswerteeinheit 130 zu vermeiden, kann die Auswertung des Summensignals a1, a2 erfindungsgemäß bevorzugt dadurch erfolgen, dass mehrere Impulse aus aufeinanderfolgenden Zeitbereichen T1, T2, T3, T4 (Figur 3a) integriert bzw. addiert werden, was bevorzugt durch analoge Schaltungskomponenten erfolgen kann. Das entsprechend erhaltene integrierte Signal ist Untersuchungen der Anmelderin zufolge bei einer Auswertung z.B. einiger zehn Impulse - trotz verhältnismäßig kleiner Phasendifferenzen aufgrund der hohen Lichtgeschwindigkeit - durch herkömmliche CMOS-Auswerteschaltungen, vgl. die Elemente 133, 134, auswertbar. Die Integration des Summensignals a1 bzw. des verstärkten Summensignals a2 findet bevorzugt ebenfalls in den Auswerteschaltungen 133, 134 statt.

Das erfindungsgemäße Verfahren ermöglicht demnach die Auswertung von Lichtlaufzeiten des ersten Sendesignals s1 mit wenig aufwändigen Schaltungen und bei einer Präzision, die eine Abstandsmessung im Bereich zwischen etwa einigen Millimetern - bei geeigneter Anzahl von Integrationen - und etwa mehreren zehn Metern oder mehr zulässt.

Analog zu der Auswertung der Phaseninformationen kann die Auswertung der Amplituden der empfangenen Signale s1', sr' bzw. des daraus gebildeten Summensignals a1 z.B. nur in vorgebbaren Zeitbereichen T5, T6, T7, T8 (Figur 3a) erfolgen. Das Sendesignal s1 unterliegt in Abhängigkeit des Abstands D (Figur 4) einer stärkeren Dämpfung als das Referenzsignal sr; diese unterschiedliche Dämpfung stellt sich in einer Abweichung des Summensignals a1 von einer Referenzamplitude (gestrichelte Zeitachse t in Figur 3a) dar und wird in den Zeitbereichen T5, T6, T7, T8, z.B. mittels Integration über mehrere Zeitbereiche T5, T6, T7, T8 ausgewertet. Analog zu der vorstehend beschriebenen Auswertung der Phasendifferenz kann die Empfindlichkeit der erfindungsgemäßen Auswertung auch hinsichtlich der Amplitudendifferenz durch die Integration entsprechender Zeitbereiche T5, T6, .. des Summensignals a1, a2 gesteigert werden.

Die vorstehend beschriebene Auswertung des Summensignals a1 erfolgt bevorzugt in den Funktionsblöcken 133, 134, denen eingangsseitig entsprechend das verstärkte Summensignal a2 zugeführt wird. An den Ausgängen der Funktionsblöcke 133, 134 stehen die Phasen- bzw. Amplitudendifferenz der empfangenen Signale s1', sr' repräsentierende Signale b1, b2 bereit.

Unter Verwendung dieser Signale b1, b2 können die das Referenzsignal sr beeinflussenden Filtermittel 120 (Figur 1) so angepasst werden, dass sich die empfangenen Signale s1', sr' trotz Dämpfung und Laufzeitunterschieden aufgrund der unterschiedlichen Übertragungsstrecken 190a, 190r wieder zu einem Gleichsignal ergänzen, wodurch ein ausgeregelter Zustand erreicht wird.

Da die Signale b1, b2 wie bereits beschrieben Informationen über den Abstand D enthalten, kann aus Ihnen z.B. unter Verwendung entsprechender Kennlinien oder Kennfelder auf den Abstand D zu einem Objekt 600 geschlossen werden.

Durch das Bereitstellen mehrerer Übertragungsstrecken können mithilfe des erfindungsgemäßen Umfeldsensors 500 detaillierte Informationen über Objekte 600 bzw. Hindernisse in dem Umfeld des Kraftfahrzeugs erhalten werden.

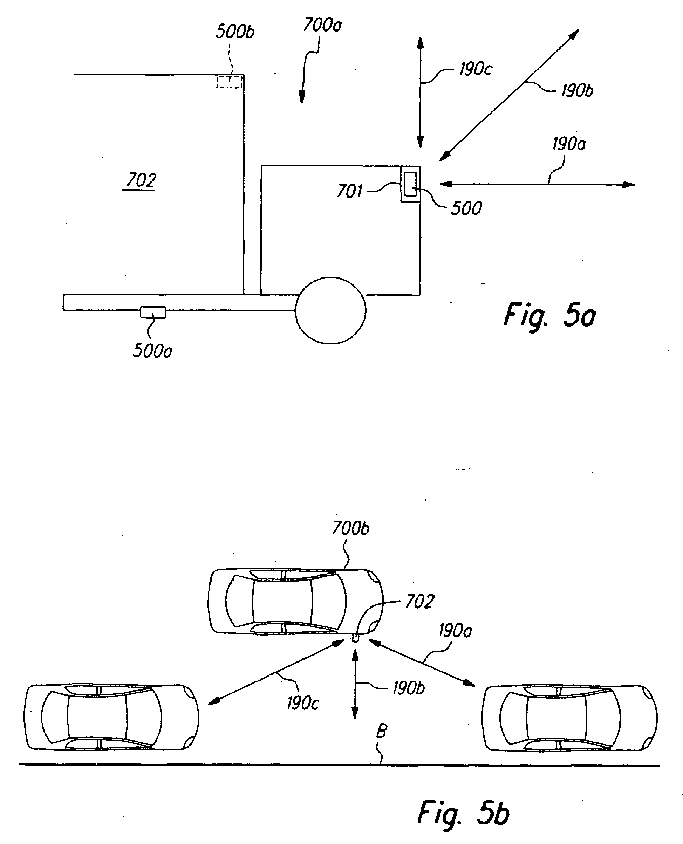

Figur 5a zeigt schematisch ein Nutzfahrzeug 700a, dem ein erfindungsgemäßer Umfeldsensor 500 in einem oberen Bereich der Windschutzscheibe zugeordnet ist. Der Umfeldsensor 500 ist vorteilhaft zusammen mit einem ebenfalls vorgesehenen Regensensor 701 in ein gemeinsames Modul integriert und ermöglicht die Ausbildung von insgesamt drei verschiedenen Übertragungsstrecken 190a, 190b, 190c, die in einer zur Horizontalen bzw. zur Fahrbahn orthogonalen Ebene, d.h. in Figur 5a in der Zeichenebene, liegen.

Die Übertragungsstrecken 190a, 190b, 190c können entweder gleichzeitig oder auch zeitlich nacheinander betrieben werden und ermöglichen mit dem Erfindungsgemäßen Auswerteverfahren die Erkennung von Hindernissen bzw. sonstigen Objekten, die sich in Fahrtrichtung vor dem Nutzfahrzeug 700a befinden. Insbesondere ermöglicht der erfindungsgemäße Umfeldsensor 500 die Ermittlung der Abstände ggf. auftretender Objekte (nicht in Figur 5a gezeigt), so dass unter Kenntnis der Geometrie der Anordnung 500 präzise ein Fahrkorridor für das Nutzfahrzeug 700a bzw. darin auftretende Hindernisse ermittelbar sind.

Das in Figur 5a abgebildete Nutzfahrzeug 700a verfügt vorteilhaft über einen weiteren Umfeldsensor 500a, der im Bodenbereich des Nutzfahrzeugs 700a angeordnet ist und beispielsweise zur Erkennung von Objekten seitlich Nutzfahrzeugs 700a verwendbar ist.

Es ist ferner denkbar, den erfindungsgemäßen Umfeldsensor so anzuordnen, dass er einen Laderaum 702 überwachen kann, vgl. Bezugszeichen 500c.

Bei einer weiteren vorteilhaften Erfindungsvariante ist der erfindungsgemäße Umfeldsensor wie in Figur 5b abgebildet in einen seitlichen Blinker 702 des Kraftfahrzeugs 700b integriert und ermöglicht durch die Ausbildung einer oder mehrerer seitwärts von dem Kraftfahrzeug 700b weggerichteter Übertragungsstrecken 190a, 190b, 190c die Untersuchung entsprechender Raumbereiche neben dem Kraftfahrzeug, wodurch insbesondere auch die präzise Erkennung von Parklücken ermöglicht wird.

Besonders vorteilhaft ist mindestens eine der Übertragungsstrecken zur Parklückendetektion nicht in einer zur Horizontalen bzw. Fahrbahn parallelen Ebene angeordnet, sondern weist um einen vorgebbaren Winkel abwärts, so dass u.a. auch der Abstand des Umfeldsensors 500 und damit des Fahrzeugs 700b von dem Bordstein feststellbar ist.

Bei dem vorliegenden Beispiel gemäß Figur 5b sind zwei Übertragungsstrecken 190a, 190c vorgesehen, die jeweils einen seitlich rechts vor bzw. hinter dem Kraftfahrzeug 700b liegenden Bereich überwachen, während eine dritte Übertragungsstrecke 190b so angeordnet ist, dass sie eine Ermittlung des Abstands des Kraftfahrzeugs 700b von dem Bordstein B ermöglicht.

Die Ergebnisse der erfindungsgemäßen Auswertung können einem Fahrer des Kraftfahrzeugs 700a, 700b beispielsweise akustisch oder optisch durch geeignete Signalgeber zur Kenntnis gebracht werden.

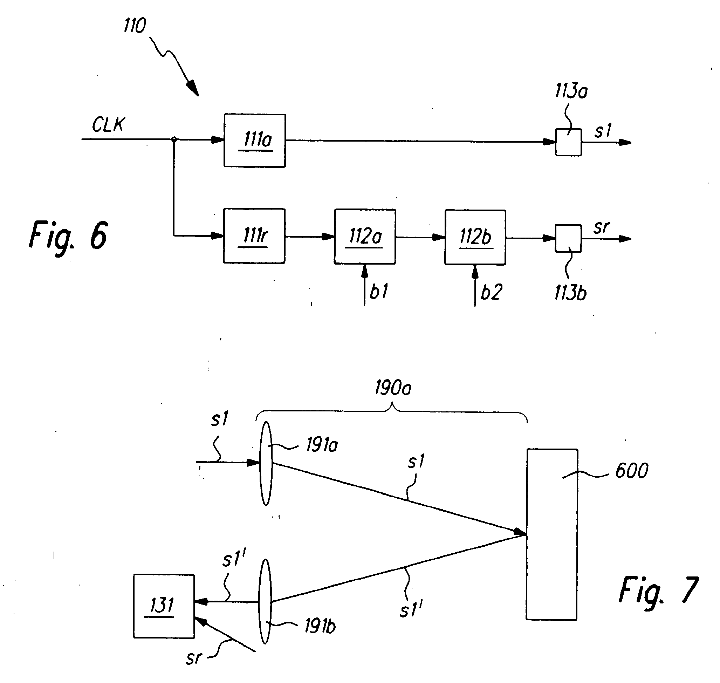

Die über die Übertragungsstrecken 190a, 190r (Figur 1) zu übertragenden Signale s1, sr werden vorteilhaft in Abhängigkeit eines zentralen Taktsignals CLK der Sensorvorrichtung 100 gebildet, das hierzu entsprechenden Signalgeneratoren 111a, 111r der in Figur 6 abgebildeten Ausführungsform der Signalerzeugungseinheit 110 zugeführt ist.

Bei dem Taktsignal CLK kann es sich bevorzugt beispielsweise um ein Rechtecksignal mit einer Taktfrequenz von etwa 100 kHz handeln, und die Signalgeneratoren 111a, 111r können als Treiberbausteine ausgebildet sein, wobei der Signalgenerator 111r eine Invertierung des Taktsignals CLK vorsieht, um die erwünschte Phasenverschiebung des Referenzsignals sr von 180° zu dem ersten Sendesignal s1 zu erzielen.

Anstelle der in Figur 1 außerhalb der Signalerzeugungseinheit 110 angeordneten Filtermittel 120 können vorteilhaft auch in die Signalerzeugungseinheit 110 integrierte Filtermittel vorgesehen sein, die gemäß Figur 6 einen Phasenschieber 112a und/oder einen steuerbaren Verstärker 112b umfassen.

Dem Phasenschieber 112a ist beispielsweise das die Phasendifferenz der empfangenen Signale s1', sr' repräsentierende Signal b1 (vgl. Figur 2) zugeführt, um die vorstehend beschriebene Phasenregelung mit dem Ziel der Erreichung eines Gleichsignals für das Summensignal a1 (Figur 2, 3a) auszuführen.

Analog hierzu ist dem steuerbaren Verstärker 112b das die Amplitudendifferenz der empfangenen Signale s1', sr' repräsentierende Signal b2 zugeführt, um die vorstehend beschriebene Amplitudenregelung - ebenfalls mit dem Ziel der Erreichung eines Gleichsignals für das Summensignal a1 (Figur 2, 3a) - auszuführen.

Die Funktionsblöcke 113a, 113b symbolisieren Ansteuerschaltungen einschließlich entsprechender elektrooptischer Wandler wie z.B. Leuchtdioden, an deren Ausgängen das betreffende optische Signal s1, sr zur Übertragung über die jeweilige Übertragungsstrecke 190a, 190r (Figur 1) verfügbar ist.

Die als Freiraum-Übertragungsstrecke ausgebildete erste Übertragungsstrecke 190a umfasst bevorzugt eine in Figur 7 schematisch durch bikonvexe Linsen 191a, 191b dargestellte Sende- und Empfangsoptik zur Abbildung des Signals s1 auf den zu beobachtenden Bereich im Umfeld des Kraftfahrzeugs 700a, 700b, bzw. zur Abbildung eines an dem Objekt 600 reflektierten, empfangenen Signals s1' auf die Fotodiode 131.

Die Referenz-Übertragungsstrecke 190r (Figur 1) kann bevorzugt so ausgebildet sein, dass eine das Referenzsignal sr abgebende Leuchtdiode direkt in die Fotodiode 131 strahlt. Anstelle einer optischen Realisierung kann die Referenz-Übertragungsstrecke 190r auch rein elektronisch ausgebildet sein. In diesem Fall wird das Referenzsignal beispielsweise dem Fotostrom der Fotodiode 131 in Form eines Referenzstroms mit der erfindungsgemäß vorgesehenen Signalform addiert.

Die in Figur 6 abgebildeten Ansteuerschaltungen 113a, 113b besitzen einer vorteilhaften Ausführungsform zufolge die in Figur 8 abgebildete Struktur, wonach beispielhaft der Ansteuerschaltung 113a eingangsseitig ein Wechselanteil des Sendesignals s1 bzw. eines dem Sendesignal s1 entsprechenden elektrischen Signals über einen Koppelkondensator C1 zuführbar ist. Der Maximalstrom für den als Leuchtdiode ausgebildeten elektrooptischen Wandler LED ist durch die Wahl des Ohmwiderstands R festgelegt, der gleichzeitig auch als Shunt zur Messung des durch die Leuchtdiode LED fließenden Stroms I dient.

Der erfindungsgemäß ebenfalls in der Ansteuerschaltung 113a vorgesehene Integrierer INT erfasst den durch die Leuchtdiode LED fließenden Strom I und regelt diesen über den Feldeffekttransistor FET auf einen konstanten Mittelwert, um zu verhindern, dass sich Temperaturschwankungen der Leuchtdiode LED aufgrund unterschiedlicher Eigenerwärmung ergeben, wodurch eine besonders hohe Präzision bei der Erzeugung-des optischen Signals s1 erzielt wird.

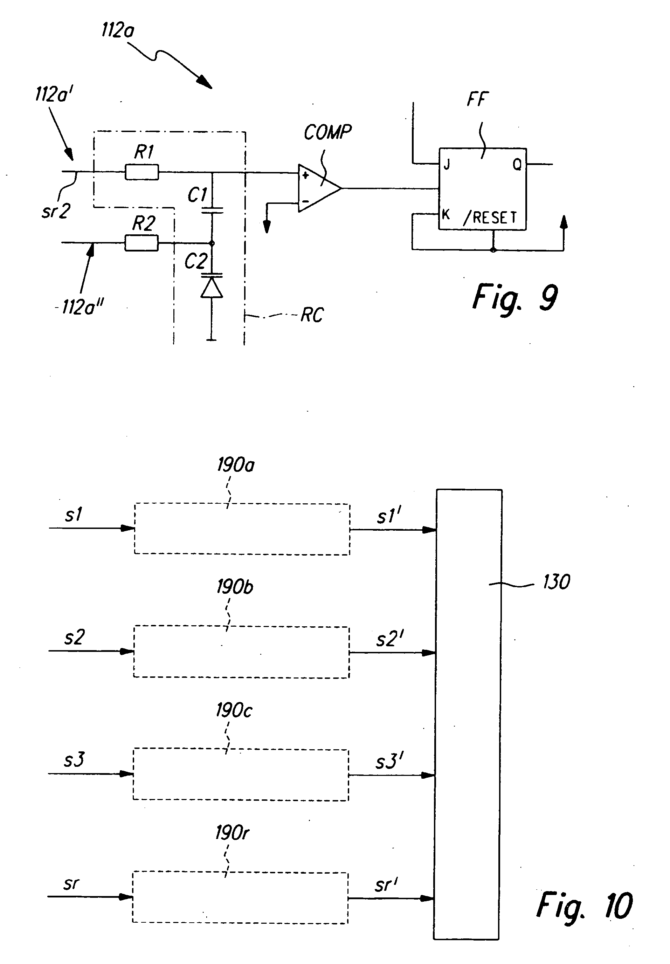

Eine besonders bevorzugte Ausführungsform für den in der Signalerzeugungseinheit 110 (Figur 1) enthaltenen Phasenschieber 112a ist nachfolgend unter Bezugnahme auf Figur 9 beschrieben.

Der Phasenschieber 112a ist dazu vorgesehen, ein ihm eingangsseitig zugeführtes Rechtecksignal, bei dem es sich beispielsweise um das Referenzsignal sr (Figur 1) bzw. eine entsprechende Vorstufe sr2 handeln kann, um einen vorgebbaren Phasenwinkel zu verzögern.

Hierzu weist der Phasenschieber 112a an seinem Eingang 112a' eine RC-Kombination RC auf, die eine steuerbare Zeitkonstante realisieren kann. Vorliegend ist die RC-Kombination RC hierzu aus dem Ohmwiderstand R1 und zwei kapazitiven Elementen C1, C2 gebildet, wobei das erste kapazitive Element C1 ein Kondensator ist und wobei das zweite kapazitive Element C2 eine Kapazitätsdiode C2 ist. Bei der vorliegenden Konfiguration kann die Zeitkonstante der RC-Kombination RC durch Änderung einer Steuerspannung beeinflusst werden, die der Kapazitätsdiode C2 über den Anschluss 112a" und den Ohmwiderstand R2 zuführbar ist. Vorteilhaft kann dem Anschluss 112a" ein von dem Signal b1 (vgl. Figur 2) abhängiges Signal oder auch direkt das Signal b1 zugeführt werden, so dass die mittels der Auswerteeinheit 130 erhaltene Information über die Phasenverschiebung der Signale s1', sr' direkt zur Steuerung des Phasenschiebers 112a nutzbar ist.

Das durch die RC-Kombination RC verzögerte Signal wird durch den nachgeschalteten Komparator COMP, dem an einem Eingang ferner eine vorgebbare Referenzspannung zugeführt ist, schließlich wieder in ein Rechtecksignal umgewandelt.

Bevorzugt wird dem Phasenschieber 112a an seinem Eingang ein Rechtecksignal sr2 zugeführt, das die doppelte Frequenz des Referenzsignals sr aufweist. Auf diese Weise erhält der Phasenschieber 112a und insbesondere auch der Komparator COMP dementsprechend nur steigende Flanken des Rechtecksignals mit der für das Referenzsignal sr vorgesehenen Frequenz, wodurch Verzerrungen bei der Bildung des auszugebenden Rechtecksignals in dem Komparator COMP aufgrund von Hystereseeffekten vermieden werden. Derartige Verzerrungen würden u.a. eine unterschiedliche Verzögerung steigender Flanken und fallender Flanken des verarbeiteten Signals bewirken und demnach die Stellgenauigkeit des Phasenschiebers 112a erheblich beeinträchtigen, was sich negativ auf die Empfindlichkeit der Sensorvorrichtung 100 auswirkt. Durch die erfindungsgemäße Verwendung eines Rechtecksignals sr2 mit der doppelten Frequenz ist sichergestellt, dass z.B. alle steigenden Flanken dieselbe Verzögerung, d.h. Phasenverschiebung, erfahren. Ein dem Komparator COMP nachgeordneter Frequenzteiler FF, der vorliegend als JK-FlipFlop ausgebildet ist, setzt das verzögerte Signal wieder auf die für das Referenzsignal sr erwünschte Frequenz herunter, wodurch an dem Ausgang Q des JK-Flip-Flops FF ein Rechtecksignal mit der erforderlichen Frequenz und der vorgegebenen Phasenverschiebung erhalten wird. Zur Synchronisation mit dem Taktsignal CLK (Figur 6) des gesamten Systems kann der J-Eingang des JK-Flip-Flops FF in geeigneter, dem Fachmann bekannter Weise, mit einem weiteren Steuersignal beaufschlagt werden, das vorzugsweise direkt aus dem Taktsignal CLK abgeleitet ist.

Anstelle der Kapazitätsdiode C2 kann dem Phasenschieber 112a auch eine steuerbare Matrix aus Ohmwiderständen bzw. Kondensatoren (CDAC) zugeordnet sein, die unter digitaler Ansteuerung die Einstellung verschiedener Zeitkonstanten für die RC-Kombination ermöglicht, indem, beispielsweise mittels Analogschaltern usw., unterschiedliche Schaltungskonfigurationen hergestellt werden. Zur Realisierung eines möglichst großen Stellbereichs für die Zeitverzögerung sind die Bauteilwerte für die einzelnen Ohmwiderstände bzw. Kondensatoren vorzugsweise binär abzustufen. Die Ansteuerung der Matrix kann vorteilhaft direkt über eine Recheneinheit, z.B. einen Mikrocontroller oder digitalen Signalprozessor (DSP) erfolgen, die auch die Auswertung der Signale b1, b2 sowie die Steuerung der weiteren Komponenten der Sensorvorrichtung 100 durchführt.

Anstelle rechteckförmiger Signale s1, sr können auch sinusförmige Signale oder sonstige vorzugsweise periodische Signale zur Übertragung über die Übertragungsstrecken 190a, 190r verwendet werden, die sich in einem ausgeregelten Zustand zu einem Gleichsignal ergänzen können, was eine einfache Erkennung des ausgeregelten Zustands ermöglicht. In diesem ausgeregelten Zustand sind die Informationen über den Abstand D bzw. das Reflexionsvermögen des Objekts 600 direkt in den Größen b1, b2 (Figur 2) enthalten.

Es ist ferner denkbar, dass solche Signale zur Übertragung über die Übertragungsstrecken 190a, 190r verwendet werden, die sich - in einem ausgeregelten Zustand - nicht zu einem Gleichsignal ergänzen. Zur erfolgreichen Durchführung des erfindungsgemäßen Verfahrens ist es ausreichend, wenn die empfangenen Signale bzw. ein hieraus abgeleitetes Signal wie z.B. das Summensignal al (Figur 2) eine bestimmte Signalform aufweist, die den ausgeregelten Zustand möglichst einfach erkennen lässt. In diesem Fall ist bereits die Gewinnung von Informationen über Laufzeit- bzw. Phasendifferenzen und damit z.B. die Abstands- und Reflexionsmessung möglich.

Bevorzugt sind die Signale s1, sr jedoch so gewählt, dass eine Empfindlichkeit der Abweichung gegenüber der bestimmten Signalform, die den ausgeregelten Zustand kennzeichnet, in Abhängigkeit der Laufzeitunterschiede bzw. Reflexion/Dämpfung möglichst groß ist, um die Auflösung des erfindungsgemäßen Messverfahrens zu maximieren. Derartige Signalformen sind bereits unter Bezugnahme auf die Figuren 3b bis 3d beschrieben worden. Bei den beschriebenen, zueinander inversen Rechtecksignalen genügt bereits eine minimale Phasendifferenz, um einen Impuls I1, I2 mit verhältnismäßig großer Amplitude zu erzeugen, dessen Signalenergie im Wege der beschriebenen Integration über mehrere Impulse auch durch verhältnismäßig schmalbandige Empfänger bzw. Auswerteschaltungen genutzt werden kann.

Bei der Verwendung von rechteckförmigen Signalen s1, sr können diese vorteilhaft direkt aus einem Rechtecksignal CLK (Figur 6) eines Oszillators abgeleitet werden, der beispielsweise den Referenztakt für die Sensorvorrichtung 100 erzeugt.

Alternativ hierzu ist die Erzeugung der Signale s1, sr vorteilhaft auch durch direkte digitale Synthese (DDS) möglich, bei der z.B. ein in einem Speicher abgelegter Signalverlauf zur Erzeugung der Signale s1, sr mittels eines Digital-Analog-Wandlers verwendet wird. Durch Verwendung des DDS-Prinzips können beliebige Kurvenformen gebildet werden.

Bei einer weiteren sehr vorteilhaften Ausführungsform der vorliegenden Erfindung ist vorgesehen, mehrere Übertragungsstrecken mittels einer Sensorvorrichtung 100 zu realisieren, vgl. Figur 10. Anstelle einer einzigen Freiraum-Übertragungsstrecke 190a, wie sie bei der Ausführungsform gemäß Figur 1 vorgesehen ist, weist die vorliegende Ausführungsform der erfindungsgemäßen Sensorvorrichtung 100 wie aus Figur 10 ersichtlich zusätzlich zu der Referenz-Übertragungsstrecke 190r drei Übertragungsstrecken 190a, 190b, 190c auf, die vorzugsweise alle als Freiraum-Übertragungsstrecken ausgebildet sind, vgl. auch Figur 5a, 5b.

Die den unterschiedlichen Übertragungsstrecken 190a, 190b, 190c zugeführten Signale s1, s2, s3 können einer ersten - auf Rechtecksignalen basierenden - Erfindungsvariante zufolge jeweils als Rechtecksignal ausgebildet sein, wobei das betreffende Signal s1, s2, s3 jeweils eine Phasenverschiebung von 180° zu dem ebenfalls als Rechtecksignal ausgebildeten Referenzsignal sr aufweist. Alternativ können neben Rechtecksignalen auch die vorstehend beschriebenen weiteren Signalformen verwendet werden, die die erfindungsgemäße Auswertung durch die Auswerteeinheit 130 ermöglichen.

Die in Figur 10 abgebildete Konfiguration kann beispielsweise derart betrieben werden, dass zeitlich aufeinanderfolgend jeweils nur eine der drei Übertragungsstrecken 190a, 190b, 190c zusammen mit der Referenz-Übertragungsstrecke 190r verwendet wird, wobei sich für die Auswertung die bereits beschriebene Verfahrensweise ergibt.

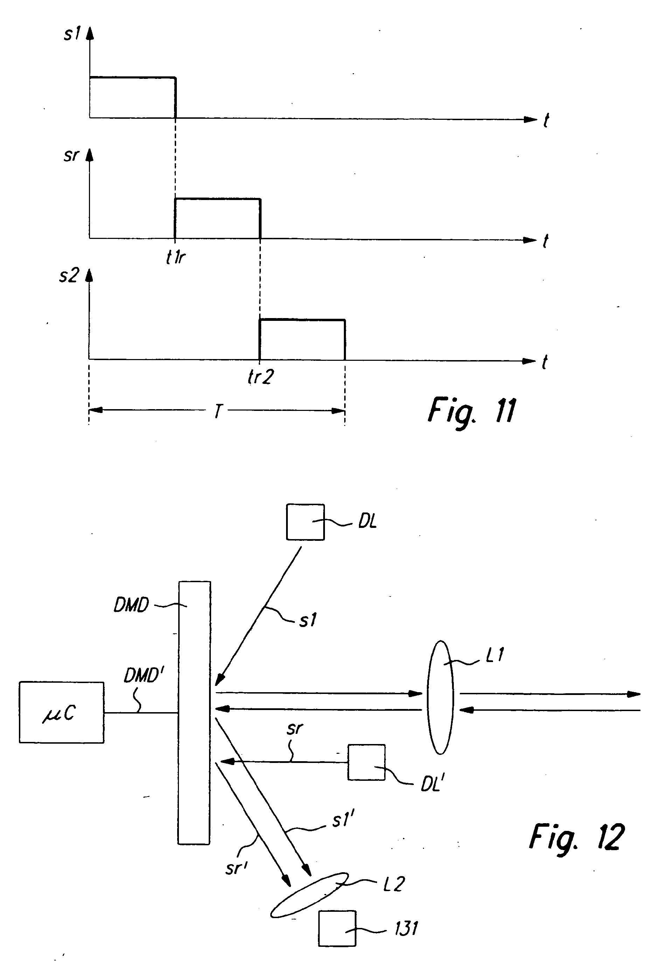

Es ist darüberhinaus auch denkbar, mehr als eine der drei Übertragungsstrecken 190a, 190b, 190c, z.B. die Übertragungsstrecken 190a, 190b, gleichzeitig zusammen mit der Referenz-Übertragungsstrecke 190r zu verwenden. In diesem Fall kann beispielsweise vorgesehen sein, dass die Signale s1, s2, sr wiederum Rechteckform aufweisen, vgl. Figur 11, wobei jedes Signal s1, s2, sr allerdings nicht für die halbe Periodendauer T, d.h. für 180°, sondern nur für ein Drittel der Periodendauer, d.h. für 120°, einen von Null verschiedenen Amplitudenwert aufweist. Bei einer geeigneten Phasenverschiebung der Signale s1, s2, sr von jeweils 120° zueinander, können sich die sich ergebenden Empfangssignale s1', s2', sr' an den Ausgängen der Übertragungsstrecken 190a, 190b, 190r vorteilhaft - in dem ausgeregelten Zustand - wieder zu einem Gleichsignal überlagern.

Bei der vorstehend beschriebenen gleichzeitigen Verwendung mehrerer nicht als Referenz-Übertragungsstrecke 190r ausgelegter Übertragungsstrecken 190a, 190b ist vorteilhaft jeder Übertragungsstrecke 190a, 190b ein eigener Phasenschieber und ein eigener Verstärker zugeordnet, um die entsprechenden Signale s1, s2 gegenüber dem vorzugsweise nicht derartig beeinflussten Referenzsignal sr hinsichtlich ihrer Phase bzw. Amplitude zu verändern.

Eine Auswertung einer sich aufgrund von Laufzeiteffekten des Signals s1 ergebenden Überlappung zwischen dem empfangenen Signal s1' und dem empfangenen Referenzsignal sr' kann zu dem in Figur 11 angedeuteten Zeitpunkt t1r vorgenommen werden, während eine vergleichbare Auswertung für das empfangene Signal s2' zu dem Zeitpunkt tr2 stattfindet.

Durch die vorstehend beschriebene Variante des erfindungsgemäßen Verfahrens können unter Verwendung eines einzigen Referenzsignals sr vorteilhaft gleich zwei oder mehr Übertragungsstrecken 190a, 190b zur Reflexions- und/oder Abstandsmessung genutzt werden, so dass bei entsprechender Auslegung der Freiraum-Übertragungsstrecken z.B. sich in unterschiedliche Raumrichtungen erstreckende Bereiche, erfasst und überwacht werden können.

Bei mehr als zwei gleichzeitig eingesetzten Referenzsignalen sr können zur Auswertung vorteilhaft die Überlappungen eines ersten Signals s1 mit dem Referenzsignal sr zu einer Überlappung eines weiteren Signals s3 mit dem ersten Signal s1 oder dergleichen in Beziehung gesetzt werden. Zur Steigerung der Präzision können jedoch auch mehrere Referenzsignale erzeugt und verwendet werden, deren nichtverschwindende Signalwerte bevorzugt zeitlich zwischen den nichtverschwindenden Signalwerten von Nicht-Referenzsignalen s1, s2, s3 angeordnet werden, so dass sich die zu analysierenden laufzeitbedingten Überlappungen jeweils zwischen einem Nicht-Referenzsignal s1, s2, s3 und einem Referenzsignal sr ergeben.

Der Prozess des Ausregelns durch Anpassung der Phasenverschiebungen bzw. Amplituden der Signale s1, s2, s3, sr kann als mehrdimensionaler Optimierungsprozess aufgefasst werden, bei dem bevorzugt zunächst die Ausregelung der Amplituden erfolgt, um die Empfindlichkeit bei einer sich anschließenden Ausregelung der Phasenverschiebungen zu steigern.

Alternativ hierzu ist es jedoch auch denkbar, zunächst die Phasenverschiebung zwischen einem Signal s1 und dem Referenzsignal sr auszuregeln, was z.B. dadurch erfolgen kann, dass die Fläche der sich in den Zeitbereichen T1, T2, .. (Figur 3a) ergebenden Impulse (vgl. auch I1, I2 aus Figur 3d), d.h. das entsprechende Zeitintegral über dem Summensignal a1 (Figur 2) in den betreffenden Zeitbereichen, durch eine entsprechende Phasenverschiebung des Signals s1 oder sr minimiert wird.

Der aufgrund von Amplitudenunterschieden zwischen den empfangenen Signalen s1', sr' in den Zeitbereichen T1, T2, .. auftretende Beitrag zu dem Zeitintegral über dem Summensignal a1, der zur Ermittlung der Phasenverschiebung an sich unerwünscht ist, kann vorteilhaft durch eine Auswertung des Summensignals in den Zeitbereichen T5, T6, .. berücksichtigt und entsprechend aus den Integralwerten für die Zeitbereiche T1, T2, .. eliminiert werden.

Neben der Verwendung von Leuchtdioden als elektrooptische Wandler zur Erzeugung optischer Signale sind u.a. auch Laserdioden einsetzbar. Ganz besonders bevorzugt werden oberflächenemittierende Diodenlaser, VCSEL (vertical cavity surface emitting laser) verwendet, die besonders klein bauen und einen verhältnismäßig geringen Strahlquerschnitt aufweisen. Beispielsweise können VCSEL-Diodenlaser des Typs SFH 4020 von OSRAM verwendet werden.

Bei einer weiteren sehr vorteilhaften Ausführungsform der vorliegenden Erfindung ist mindestens eine steuerbare Mikrospiegeleinrichtung in einer der Übertragungsstrecken 190a, 190b, 190c, 190r oder eingangs- bzw. ausgangsseitig hiervon vorgesehen. Dadurch kann vorteilhaft der Strahlengang der betreffenden Übertragungsstrecke 190a, 190b, 190c, 190r beeinflusst werden.

Die erfindungsgemäße Mikrospiegelanordnung weist vorzugsweise mindestens ein Array von steuerbaren Mikrospiegeln auf, insbesondere digital steuerbare Mikrospiegel (DMD, digital micromirror device).

In der Figur 12 ist beispielhaft schematisch eine erfindungsgemäße Konfiguration abgebildet, die eine Mehrzahl von DMD-Einheiten aufweist, welche vorliegend insgesamt durch den Funktionsblock DMD symbolisiert sind.

Die verschiedenen DMD-Einheiten DMD sind Bestandteil einer ersten Übertragungsstrecke 190a (Figur 1), die zwischen einem optischen Sender, z.B. einem VCSEL-Diodenlaser DL, einer in Figur 12 durch eine bikonvexe Linse L1 symbolisierten ersten Optik, einem nicht abgebildeten, zumindest teilweise reflektierenden, Objekt , einer in Figur 12 durch eine bikonvexe Linse L2 symbolisierten zweiten Optik und der Fotodiode 131 verläuft. Über die erste Übertragungsstrecke 190a wird vorliegend ein erstes optisches Signal s1 übertragen, das in der bereits beschriebenen Weise zumindest teilweise an dem Objekt 600 reflektiert und der Fotodiode 131 als empfangenes Signal s1' zugeführt wird.

Die verschiedenen DMD-Einheiten DMD sind vorteilhaft ferner Bestandteil einer zweiten Übertragungsstrecke, der Referenz-Übertragungsstrecke 190r (Figur 1), die zwischen einem weiteren optischen Sender, z.B. einem VCSEL-Diodenlaser DL', und der zweiten Optik L2 und der Fotodiode 131 verläuft. Über die zweite Übertragungsstrecke 190r wird vorliegend das optische Referenzsignal sr übertragen, das ebenfalls der Fotodiode 131 zugeführt wird, nämlich als empfangenes Referenzsignal sr'.

Anstelle der Diodenlaser DL, DL' kann als optische Signalquelle jeweils z.B. auch eine Leuchtdiode oder eine andere geeignete Lichtquelle verwendet werden.

Die DMD-Einheiten DMD sind über eine Schnittstelle DMD', bei der es sich beispielsweise um eine serielle Schnittstelle, z.B. eine SPI (serial peripheral interface)-Schnittstelle handeln kann, mit einer sie steuernden Recheneinheit µC, z.B. mit einem Mikrocontroller, verbunden und können bei entsprechender Ansteuerung die Übertragungsstrecken 190a, 190r beeinflussen.

Beispielsweise ist mindestens eine DMD-Einheit so konfiguriert, dass sie das von dem Diodenlaser DL erzeugte optische Signal s1 in Richtung der ersten Optik L1, d.h. auf das Objekt 600 zu, reflektiert. Mindestens eine weitere DMD-Einheit ist so konfiguriert, dass sie das an dem Objekt 600 reflektierte und in der Figur 12 von rechts nach links durch die erste Optik L1 tretende optische Signal in Richtung der zweiten Optik L2 und damit auf die Fotodiode 131 reflektiert.

Mindestens noch eine weitere DMD-Einheit reflektiert das von dem Diodenlaser DL' erzeugte optische Referenzsignal sr ebenfalls in Richtung der zweiten Optik L2 und damit auf die Fotodiode 131.

Die erfindungsgemäße Verwendung von DMD-Einheiten ermöglicht bei den erfindungsgemäß verwendeten optischen Übertragungsstrecken einerseits eine flexiblere Anordnung der Komponenten DL, DL', L1, L2, z.B. durch eine Faltung des entsprechenden Strahlengangs, so dass insgesamt sehr klein bauende Sensorvorrichtungen 100 vorgesehen werden können. Darüberhinaus ist es auch möglich, z.B. ein bestimmtes Sendesignal abwechselnd gezielt auf verschiedene Optiken bzw. zu untersuchende Raum- bzw. Winkelbereiche oder auf die Fotodiode 131 zu reflektieren und somit unter Verwendung einer einzigen Lichtquelle DL gleichzeitig zwei oder mehr Übertragungsstrecken zu betreiben bzw. eine Mehrzahl Raum- bzw. Winkelbereichen zu überwachen.

Zu Kalibrierungszwecken kann ferner vorgesehen sein, das von dem Diodenlaser DL stammende Licht s1 direkt auf die Fotodiode 131 umzulenken, usw.

Durch eine entsprechende Ansteuerung von DMD-Einheiten ist es darüberhinaus auch möglich, die reflektierte Lichtmehge zu beeinflussen, wodurch auch eine Dämpfung eines optischen Signals realisierbar ist. Ferner können optische Signale unterschiedlicher Wellenlänge, die z.B. von mehreren nebeneinander angeordneten Lichtquellen stammen, wahlweise z.B. in Richtung des zu beobachtenden Raumbereichs reflektiert werden.

Besonders vorteilhaft kann die Anordnung der in Figur 12 abgebildeten Komponenten derart erfolgen, dass sowohl das empfangene Signal s1' als auch das empfangene Referenzsignal sr' in exakt denselben Bereich der Fotodiode 131 eingestrahlt werden, vorzugsweise auch unter möglichst demselben Winkel, wodurch die Präzision bei der Erfassung der betreffenden Signale s1', sr' gesteigert wird und nichtlineare Effekte in dem Halbleiterelement der Fotodiode 131 vermieden werden.

Auf dieselbe Weise können auch von weiteren Übertragungsstrecken empfangene Signale stets gezielt in denselben Bereich der Fotodiode 131 geleitet werden.

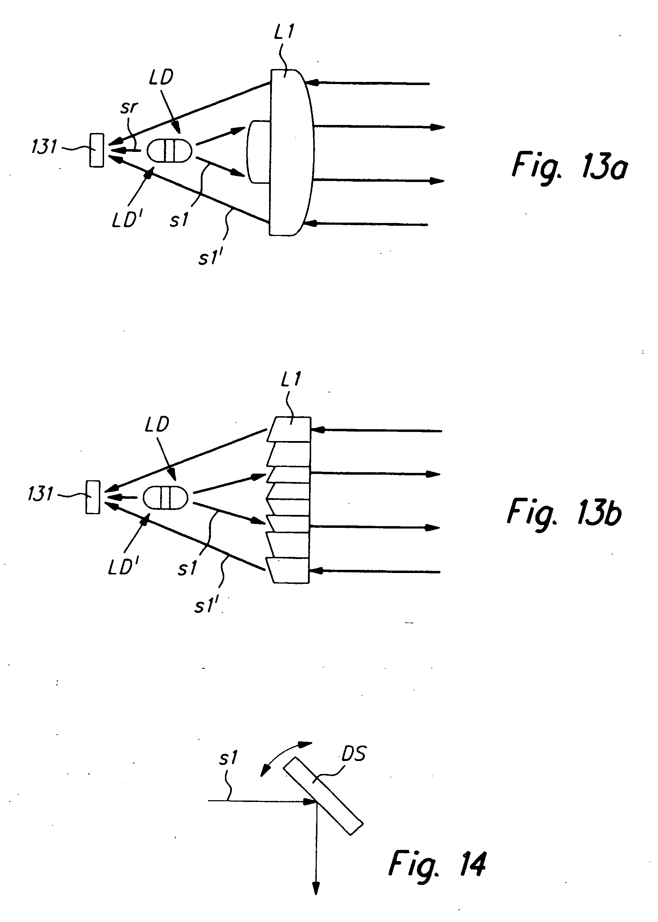

Die Figuren 13a, 13b geben zwei weitere erfindungsgemäße Konfigurationen zur Realisierung von Teilen der optischen Übertragungsstrecken 190a, 190r (Figur 1) an, die bevorzugt ohne DMD-Einheiten arbeiten.

Die in Figur 13a abgebildete Erfindungsvariante sieht als erste Optik L1 ein bifokales Linsensystem vor, das das Signal s1 des Diodenlasers bzw. einer Leuchtdiode LD in Richtung auf einen zu untersuchenden Raumbereich bündelt und gleichzeitig in dem Bereich z.B. an einem dort befindlichen Objekt 600 reflektiertes Licht s1' auf die Fotodiode 131 bündelt. Ein zur Erzeugung des Referenzsignals sr vorgesehener zweiter Diodenlaser bzw. eine Leuchtdiode LD' strahlt das optische Referenzsignal sr direkt in die Fotodiode 131 ein. Im Unterschied zu der in Figur 13a abgebildeten Erfindungsvariante sieht die Anordnung gemäß Figur 13b eine Fresnellinse als erste Optik L1 vor.

Eine weitere sehr vorteilhafte Ausführungsform des erfindungsgemäßen Verfahrens sieht die Verwendung mindestens eines Drehspiegels DS, vergleiche Figur 14, in mindestens einer der optischen Übertragungsstrecken 190a, 190b, 190c, 190r vor, der in Abhängigkeit eines Drehwinkels die Ausdehnung der betreffenden Übertragungsstrecke auf unterschiedliche Raumbereiche ermöglicht. Der Antrieb des Drehspiegels DS erfolgt beispielsweise mittels eines Schrittmotors oder anderer geeigneter, dem Fachmann bekannter Aktoren.

Bei einer weiteren sehr vorteilhaften Ausführungsform der vorliegenden Erfindung kann die Auswertung der empfangenen Signale s1', sr' (Figur 1) durch die Auswerteeinheit 130 eine Frequenzbereichsanalyse umfassen, bei der das verstärkte Summensignal a2 (Figur 2) z.B. allein auf eine Frequenzkomponente hin ausgewertet wird, die der Frequenz der verwendeten Signale s1, sr, entspricht. Da das Summensignal a1 bei dem ausgeregelten Zustand ein Gleichsignal darstellt, kann auf diese Weise wenig aufwändig ermittelt werden, ob der ausgeregelte Zustand erreicht ist.

In Abhängigkeit der Frequenzbereichsanalyse können die Filtermittel 120 (Figur 1) derart angesteuert werden, dass sich schließlich der ausgeregelte Zustand ergibt.

Bei einer anderen sehr vorteilhaften Ausführungsform der vorliegenden Erfindung ist eine im wesentlichen digitale Auswertung der empfangenen Signale s1', sr' durch die Auswerteeinheit 130 vorgesehen. Dementsprechend ist bei dieser Ausführungsform ein hinreichend breitbandiger Verstärker 132 (Figur 2) und ein dem Verstärker 132 nachgeordneter Analog-Digital-Wandler (nicht gezeigt) vorgesehen, der das verstärkte Summensignal a2 in entsprechende Digitalwerte umsetzt. Die Grenzfrequenz des Verstärkers 132 und der Fotodiode 131 sind in Abhängigkeit der gewünschten Empfindlichkeit des Auswerteverfahrens bezüglich der Phasendifferenz zwischen den empfangenen Signalen s1', sr' auszuwählen.

Eine weitere sehr vorteilhafte Ausführungsform der vorliegenden Erfindung sieht eine Kombination optischer Übertragungsstrecken mit unterschiedlichen Wellenlängen vor.

Generell ist es nicht notwendig, dass die Referenz-Übertragungsstrecke 190r optische Übertragungswege aufweist. Vielmehr kann die Übertragungsstrecke 190r auch rein elektronisch ausgebildet sein und somit vorteilhaft direkt mit den weiteren elektronischen Komponenten der erfindungsgemäßen Sensorvorrichtung 100 zusammen in ein Gehäuse integriert werden, was eine besonders klein bauende Anordnung ergibt. Ein entsprechendes elektronisches Referenzsignal sr bzw. sr' wird direkt zu einem Photostrom der Fotodiode 131 bzw. einem daraus abgeleiteten, verstärkten Spannungssignal addiert.

Die vorstehend beschriebenen DMD-Einheiten DMD (Figur 12) bzw. der Drehspiegel DS (Figur 14) können besonders vorteilhaft dazu eingesetzt werden, eine erste Übertragungsstrecke der in dem Umfeldsensor 500 (Figur 4) integrierten Sensorvorrichtung 100 in einer ersten Raumrichtung zu realisieren, während eine zweite Übertragungsstrecke so ausgebildet ist, dass eine weitere Raumrichtung in der Umgebung des Kraftfahrzeugs 700a, 700b auf Objekte bzw. Hindernisse hin untersucht wird. Entsprechende Abstände D bzw. Reflexionsgrade können z.B. im Zeitmultiplex erfasst werden, wobei vorteilhaft nur eine einzige Sensorvorrichtung 100 bzw. ein Sensormodul 500 erforderlich ist. -

Generell ermöglicht die vorliegende Erfindung auch eine flexible und zuverlässige Detektion von Hindernissen im Bereich einer Fahrzeugtür. Für eine entspreche Umfeldüberwachung sind demgemäß eine oder mehrere Übertragungsstrecken vorzusehen, die sich etwa parallel zu einer durch die Fahrzeugtür definierten Ebene auf deren Außenseite erstrecken, wozu vorteilhaft beispielsweise ein in einen Außenspiegel integrierter Umfeldsensor verwendbar ist. Drohende Kollisionen der Fahrzeugtür mit einem Hindernis wie z.B. einem nebenstehenden Fahrzeug werden auf diese Weise zuverlässig erkannt, und ggf. kann eine Verriegelung oder ein Antriebssystem für die Fahrzeugtür angesteuert werden, um die Kollision zu verhindern.

Generell kann der erfindungsgemäße Umfeldsensor 500 sowie das Auswerteverfahren zur präzisen Erfassung von Objekten in der Umgebung z.B. eines Kraftfahrzeugs eingesetzt werden, wobei unter Verwendung einer hinreichenden Anzahl sich in verschiedene Raumrichtungen erstreckender Übertragungsstrecken auch die Ermittlung eines Fahrkorridors möglich bzw. dessen Freiheit von Hindernissen erkennbar ist.

Ebenfalls durch den erfindungsgemäßen Umfeldsensor 500 überwachbar sind Lade- und Innenräume von Fahrzeugen und insbesondere auch typischerweise unübersichtliche Bereiche in dem direkten Umfeld des Fahrzeugs wie z.B. der Heckbereich oder auch der Bereich direkt vor einer Motorhaube, so dass unter Verwendung der vorliegenden Erfindung auch eine sog. blind-spot detection realisierbar ist.

Besonders vorteilhaft ist der erfindungsgemäße Umfeldsensor 500 in einen bestehenden Regensensor integrierbär oder kann mit diesem zusammen in einem gemeinsamem Modul angeordnet werden, z.B. direkt an einer Windschutzscheibe des Kraftfahrzeugs 700a, 700b.

Über dem Fachmann bekannte optische Strahlteiler oder mehrere Facetten aufweisende Reflektoren ist es darüberhinaus vorteilhaft möglich, ein einziges hinsichtlich des beaufschlagten Raumbereichs "statisches" Sendesignal auf mehrere Winkel- bzw. Raumbereiche aufzuteilen. Hierbei sind entsprechend viele Empfänger bzw. Auswerteeinheiten 130 vorzusehen, um die mehreren Sendesignale bzw. deren Reflexionen aus den unterschiedlichen Raumbereichen zu empfangen und zu analysieren, wobei der Analyse vorteilhaft jeweils dasselbe Referenzsignal zugrunde liegen kann. Ein besonderer Vorteil der Strahlteiler bzw. facettierten Reflektoren besteht darin, dass sie keine beweglichen Teile aufweisen und dementsprechend robust sind.

Der erfindungsgemäße Umfeldsensor 500 kann auch über mehrere optische Sensorvorrichtungen 100 verfügen, die unabhängig voneinander betreibbar sind oder auch miteinander synchronisiert werden können, beispielsweise um wechselweise unterschiedliche Raumbereich zu untersuchen.

## Patentansprüche

1. Umfeldsensor (500), insbesondere für ein Kraftfahrzeug (700a, 700b), zur Detektion von Objekten, insbesondere in der Umgebung des Kraftfahrzeugs (700a, 700b), umfassend mindestens eine optische Sensorvorrichtung (100), die ausgebildet ist, einen vorgebbaren Raumbereich mit mindestens einem ersten optischen Sendesignal (s1) zu beaufschlagen, und eine Auswerteeinheit (130), die ausgebildet ist, ein in dem Raumbereich, insbesondere an einem zu detektierenden Objekt (600) reflektiertes erstes Empfangssignal (s1') und ein über eine Referenzübertragungsstrecke (190r) zu sendenden Referenzsignal (sr) zu analysieren, um auf das Vorhandensein des Objekts (600) zu schließen, wobei die Auswerteeinheit (130) dazu ausgebildet ist:
- das erste Empfangssignal (s1') mit einem aus der Referenzübertragungsstrecke (190r) erhaltenen Referenzempfangssignal (sr') zu Addieren oder zu Multiplizieren, um ein Summensignal (a1) zu erhalten,
- vorgebbare Zeitbereiche des Summensignals (a1) auszuwerten, um auf eine Reflexion und/oder Dämpfung und/oder Phasenverschiebung des Sendesignals (s1) zu schließen,
- aus der Reflexion und/oder Dämpfung und/oder Phasenverschiebung auf einen Abstand (D) und/oder eine Beschaffenheit des Objekts (600) rückzuschließen,
**dadurch gekennzeichnet, dass**
die Auswerteeinheit (130) ausgebildet ist, das Summensignal (a1) über mehrere vorgebbare Zeitbereiche zu addieren bzw. zu integrieren.

2. Umfeldsensor (500) nach Anspruch 1, **dadurch gekennzeichnet, dass** die Sensorvorrichtung (100) aufweist:
- einen Sender zum Senden des mindestens einen ersten optischen Sendesignals (s1) mit einer vorgebbaren ersten Signalform über eine erste Übertragungsstrecke (190a), wobei die erste Übertragungsstrecke (190a) zumindest teilweise im Freiraum, insbesondere zwischen dem Umfeldsensor (500) bzw. dem Sender und einem zu detektierenden Objekt (600), verläuft,
- einen Empfänger zum Empfangen des Empfangssignals (s1') an einem Ausgang der ersten Übertragungsstrecke (190a),
- einen Referenzsender zum Senden mindestens eines ersten Referenzsignals (sr) mit einer vorgebbaren Referenzsignalform über die Referenzübertragungsstrecke (190r), wobei die Referenzübertragungsstrecke (190r) eine bekannte Übertragungsfunktion aufweist,
- einen Empfänger zum Empfangen eines ersten Referenzempfangssignals (sr') an einem Ausgang der Referenzübertragungsstrecke (190r), wobei das erste Sendesignal (s1) und das Referenzsignal (sr) jeweils von Null verschiedene Frequenzanteile aufweisen, und sich die Zeitfunktionen der Signale (s1, sr) zumindest über einen vorgebbaren Zeitbereich hinweg zu einem Gleichsignal addieren.

3. Umfeldsensor (500) nach Anspruch 1, **dadurch gekennzeichnet, dass** jeweils unterschiedliche Zeitbereiche (T1, T2, T3, T4; T5, T6, T7, T8) des Summensignals (a1) auswertbar sind, um auf die Reflexion und/oder Dämpfung und/oder Phasenverschiebung des Sendesignals (s1) zu schließen.

4. Umfeldsensor (500) nach einem der vorstehenden Ansprüche, **dadurch gekennzeichnet, dass** mindestens eine steuerbare Mikrospiegelanordnung (DMD) und/oder ein Strahlteiler vorgesehen ist, um den Strahlengang des Sendesignals (s1) und/oder des Empfangssignals (s1') und/oder des Referenzsignals (sr) zu beeinflussen.

5. Umfeldsensor (500) nach einem der vorstehenden Ansprüche, **dadurch gekennzeichnet, dass** mindestens eine Fokussieroptik vorgesehen ist, um das Sendesignal (s1) auf einen zu untersuchenden Raumbereich zu fokussieren.

6. Umfeldsensor (500) nach einem der vorstehenden Ansprüche, **gekennzeichnet durch** eine Leuchtdiode und/oder eine Laserdiode (DL) zur Erzeugung des Sendesignals (s1) und/oder des Referenzsignals (sr).

7. Umfeldsensor (500) nach einem der vorstehenden Ansprüche, **dadurch gekennzeichnet, dass** eine / die zur Übertragung des Sendesignals (s1) vorgesehene Übertragungsstrecke so ausgebildet ist, dass sie mindestens einen, vorzugsweise jedoch mehrere Winkelbereiche in einer Ebene umfasst, die parallel zur Horizontalen, insbesondere einer Fahrbahn oder dergleichen, und/oder im wesentlichen senkrecht zur Horizontalen und/oder im wesentlichen parallel zu einer Fahrzeugflanke und/oder einer Fahrzeugtür des Kraftfahrzeugs (700a, 700b), angeordnet ist.

8. Umfeldsensor (500) nach einem der vorstehenden Ansprüche, **dadurch gekennzeichnet, dass** mindestens eine zur Übertragung des Sendesignals (s1) vorgesehene Übertragungsstrecke so ausgebildet ist, dass sie zumindest teilweise in einem Innen- bzw. Laderaum des Kraftfahrzeugs (700a, 700b) angeordnet ist.

9. Umfeldsensor (500) nach Anspruch 7 oder 8, **dadurch gekennzeichnet, dass** für unterschiedliche Winkelbereiche jeweils unterschiedliche Übertragungsstrecken vorgesehen sind.

10. Verfahren zum Betreiben eines Umfeldsensors (500), insbesondere für ein Kraftfahrzeug (700a, 700b), zur Detektion von Objekten, insbesondere in der Umgebung des Kraftfahrzeugs (700a, 700b), wobei mindestens eine optische Sensorvorrichtung (100) einen vorgebbaren Raumbereich mit mindestens einem ersten optischen Sendesignal (s1) beaufschlagt, wobei eine Auswerteeinheit (130) ein in dem Raumbereich, insbesondere an einem zu detektierenden Objekt (600) reflektiertes erstes Empfangssignal (s1') und ein über eine Referenzübertragungsstrecke (190r) zu sendenden Referenzsignal (sr) analysiert, um auf das Vorhandensein des Objekts (600) zu schließen,
und wobei die Analyse folgende Schritte aufweist:
- Addieren oder Multiplizieren des ersten Empfangssignals (s1') mit einem aus der Referenzübertragungsstrecke erhaltenen Referenzempfangssignal (sr'), um ein Summensignal (a1) zu erhalten,
- Auswerten vorgebbarer Zeitbereiche des Summensignals (a1), um auf eine Reflexion und/oder Dämpfung und/oder Phasenverschiebung des Sendesignals (s1) durch die erste Übertragungsstrecke (190a) zu schließen,
- Rückschließen auf einen Abstand (D) und/oder eine Beschaffenheit des Objekts (600) aus der Reflexion und/oder Dämpfung und/oder Phasenverschiebung **dadurch gekennzeichnet, dass**
das Auswerten vorgebbarer Zeitbereiche das Integrieren des Summensignals (a1) über mehrere vorgebbare Zeitbereiche bzw. das Addieren des Summensignals (a1) über mehrere vorgebbare Zeitbereiche umfasst.

11. Verfahren nach Anspruch 10, **dadurch gekennzeichnet, dass**
- das mindestens eine erste optische Sendesignal (s1) mit einer vorgebbaren ersten Signalform über eine erste Übertragungsstrecke (190a) gesendet wird, wobei die erste Übertragungsstrecke (190a) zumindest teilweise im Freiraum, insbesondere zwischen dem Umfeldsensor (500) und einem zu detektierenden Objekt (600), verläuft,
- an einem Ausgang der ersten Übertragungsstrecke (190a) das erste Empfangssignal (s1') empfangen wird,
- das mindestens eine erste Referenzsignal (sr) mit einer vorgebbaren Referenzsignalform über die Referenzübertragungsstrecke (190r) gesendet wird, wobei die Referenzübertragungsstrecke (190r) eine bekannte Übertragungsfunktion aufweist,
- an einem Ausgang der Referenzübertragungsstrecke (190r) ein erstes Referenzempfangssignal (sr') empfangen wird, wobei das erste Sendesignal (s1) und das Referenzsignal (sr) jeweils von Null verschiedene Frequenzanteile aufweisen, und sich die Zeitfunktionen der Signale (s1, sr) zumindest über einen vorgebbaren Zeitbereich hinweg zu einem Gleichsignal addieren.

12. Verfahren nach Anspruch 11, **dadurch gekennzeichnet, dass** das erste Sendesignal (s1) und das Referenzsignal (sr) jeweils ein sinusförmiges oder rechteckförmiges Signal ist, und dass das erste Sendesignal (s1) eine vorgebbare Phasenverschiebung, insbesondere 180 Grad, zu dem Referenzsignal (sr) aufweist.

13. Verfahren nach Anspruch 10, **dadurch gekennzeichnet, dass** jeweils unterschiedliche Zeitbereiche (T1, T2, T3, T4; T5, T6, T7, T8) des Summensignals (a1) ausgewertet werden, um auf die Reflexion und/oder Dämpfung und/oder Phasenverschiebung des Sendesignals (s1) durch die erste Übertragungsstrecke (190a) zu schließen.

14. Verfahren nach einem der Ansprüche 10 bis 13, **dadurch gekennzeichnet, dass** für unterschiedliche Winkelbereiche jeweils unterschiedliche Übertragungsstrecken verwendet werden.

15. Verfahren nach einem der Ansprüche 10 bis 14, **dadurch gekennzeichnet, dass** mehrere Sendesignale (s1) mit unterschiedlichen Wellenlängen verwendet werden.

## Claims

1. Environment sensor (500), in particular for a motor vehicle (700a, 700b), for detecting objects, in particular in the area surrounding the motor vehicle (700a, 700b), comprising at least one optical sensor apparatus (100) which is designed to apply at least one first optical transmission signal (sl) to a predefinable spatial region, and an evaluation unit (130) which is designed to analyse a first reception signal (s1') reflected in the spatial region, in particular at an object (600) to be detected, and a reference signal (sr) to be transmitted over a reference transmission path (190r) in order to infer the presence of the object (600), the evaluation unit (130) being designed:
- to add or multiply the first reception signal (s1') to/by a reference reception signal (sr') obtained from the reference transmission path (190r) in order to obtain a sum signal (a1),
- to evaluate predefinable time domains of the sum signal (a1) in order to infer reflection and/or attenuation and/or a phase shift of the transmission signal (s1),
- to infer a distance (D) and/or a nature of the object (600) from the reflection and/or attenuation and/or phase shift,
**characterized in that**
the evaluation unit (130) is designed to add or integrate the sum signal (a1) over a plurality of predefinable time domains.

2. Environment sensor (500) according to Claim 1, **characterized in that** the sensor apparatus (100) has:
- a transmitter for transmitting the at least one first optical transmission signal (s1) with a predefinable first signal waveform over a first transmission path (190a), the first transmission path (190a) running at least partially in free space, in particular between the environment sensor (500) or the transmitter and an object (600) to be detected,
- a receiver for receiving the reception signal (s1') at an output of the first transmission path (190a),
- a reference transmitter for transmitting at least one first reference signal (sr) with a predefinable reference signal waveform over the reference transmission path (190r), the reference transmission path (190r) having a known transfer function,
- a receiver for receiving a first reference reception signal (sr') at an output of the reference transmission path (190r), the first transmission signal (s1) and the reference signal (sr) each having frequency components different from zero, and the time functions of the signals (s1, sr) being added, at least over a predefinable time domain, to form a direct signal.

3. Environment sensor (500) according to Claim 1, **characterized in that** different time domains (T1, T2, T3, T4; T5, T6, T7, T8) of the sum signal (a1) can be respectively evaluated in order to infer the reflection and/or attenuation and/or phase shift of the transmission signal (s1).

4. Environment sensor (500) according to one of the preceding claims, **characterized in that** at least one controllable micromirror arrangement (DMD) and/or a beam splitter is/are provided in order to influence the beam path of the transmission signal (s1) and/or of the reception signal (s1') and/or of the reference signal (sr).

5. Environment sensor (500) according to one of the preceding claims, **characterized in that** at least one focusing optical system is provided in order to focus the transmission signal (s1) on a spatial region to be investigated.

6. Environment sensor (500) according to one of the preceding claims, **characterized by** a light-emitting diode and/or a laser diode (DL) for generating the transmission signal (s1) and/or the reference signal (sr).

7. Environment sensor (500) according to one of the preceding claims, **characterized in that** a/the transmission path provided for transmitting the transmission signal (s1) is designed in such a manner that it comprises at least one angular range, but preferably a plurality of angular ranges in a plane which is arranged parallel to the horizontal, in particular a road or the like, and/or is arranged substantially perpendicular to the horizontal and/or substantially parallel to a side and/or a door of the motor vehicle (700a, 700b).

8. Environment sensor (500) according to one of the preceding claims, **characterized in that** at least one transmission path provided for transmitting the transmission signal (s1) is designed in such a manner that it is at least partially arranged in an inferior or boot of the motor vehicle (700a, 700b).

9. Environment sensor (500) according to Claim 7 or 8, **characterized in that** different transmission paths are respectively provided for different angular ranges.

10. Method for operating an environment sensor (500), in particular for a motor vehicle (700a, 700b), for detecting objects, in particular in the area surrounding the motor vehicle (700a, 700b), at least one optical sensor apparatus (100) applying at least one first optical transmission signal (s1) to a predefinable spatial region, an evaluation unit (130) analysing a first reception signal (s1') reflected in the spatial region, in particular at an object (600) to be detected, and a reference signal (sr) to be transmitted over a reference transmission path (190r) in order to infer the presence of the object (600),
and the analysis having the following steps of:
- adding or multiplying the first reception signal (s1') to/by a reference reception signal (sr') obtained from the reference transmission path in order to obtain a sum signal (a1),
- evaluating predefinable time domains of the sum signal (a1) in order to infer reflection and/or attenuation and/or a phase shift of the transmission signal (s1) as a result of the first transmission path (190a),
- inferring a distance (D) and/or a nature of the object (600) from the reflection and/or attenuation and/or phase shift,
**characterized in that**
the operation of evaluating predefinable time domains comprises integrating the sum signal (a1) over a plurality of predefinable time domains or adding the sum signal (a1) over a plurality of predefinable time domains.

11. Method according to Claim 10, **characterized in that**
- the at least one first optical transmission signal (s1) with a predefinable first signal waveform is transmitted over a first transmission path (190a), the first transmission path (190a) running at least partially in free space, in particular between the environment sensor (500) and an object (600) to be detected,
- the first reception signal (s1') is received at an output of the first transmission path (190a),
- the at least one first reference signal (sr) with a predefinable reference signal waveform is transmitted over the reference transmission path (190r), the reference transmission path (190r) having a known transfer function,
- a first reference reception signal (sr') is received at an output of the reference transmission path (190r), the first transmission signal (s1) and the reference signal (sr) each having frequency components different from zero, and the time functions of the signals (s1, sr) being added, at least over a predefinable time domain, to form a direct signal.

12. Method according to Claim 11, **characterized in that** the first transmission signal (s1) and the reference signal (sr) are each a sinusoidal or square-wave signal, and **in that** the first transmission signal (s1) has a predefinable phase shift, in particular 180 degrees, with respect to the reference signal (sr).

13. Method according to Claim 10, **characterized in that** different time domains (T1, T2, T3, T4; T5, T6, T7, T8) of the sum signal (a1) are respectively evaluated in order to infer the reflection and/or attenuation and/or phase shift of the transmission signal (s1) as a result of the first transmission path (190a).

14. Method according to one of Claims 10 to 13, **characterized in that** different transmission paths are respectively used for different angular ranges.

15. Method according to one of Claims 10 to 14, **characterized in that** a plurality of transmission signals (s1) with different wavelengths are used.

## Revendications

1. Capteur d'environnement (500), notamment pour véhicule à moteur (700a, 700b), destiné à détecter des objets, notamment dans l'environnement du véhicule à moteur (700a, 700b), comprenant au moins un dispositif de détection optique (100) qui est conçu pour exposer une région spatiale prédéterminée à au moins un premier signal d'émission optique (s1), et une unité d'évaluation (130) qui est conçue pour analyser un premier signal de réception (s1') réfléchi dans la région spatiale, notamment sur un objet à détecter (600), et un signal de référence (sr) devant être émis par l'intermédiaire d'une liaison de transmission de référence (190r), pour déterminer la présence de l'objet (600), l'unité d'évaluation (130) étant conçue pour :
- additionner ou multiplier le premier signal de réception (s1') et un signal de réception de référence (sr') obtenu en sortie de la liaison de transmission de référence (190r) afin d'obtenir un signal de somme (a1),
- évaluer des plages temporelles prédéterminées du signal de somme (a1) pour en déduire une réflexion et/ou une atténuation et/ou un déphasage du signal d'émission (s1),
- pour déduire de la réflexion et/ou de l'atténuation et/ou du déphasage une distance (D) et/ou une propriété de l'objet (600),
**caractérisé en ce que**
l'unité d'évaluation (130) est conçue pour additionner ou pour intégrer le signal de somme (a1) sur une pluralité de plages temporelles.

2. Capteur d'environnement (500) selon la revendication 1, **caractérisé en ce que** le dispositif de détection (100) comprend :
- un émetteur destiné à émettre l'au moins un premier signal optique d'émission (s1) avec une première forme de signal prédéterminée par l'intermédiaire d'une première liaison de transmission (190a), la première liaison de transmission (190a) s'étendant au moins partiellement dans l'espace libre, notamment entre le capteur d'environnement (500) ou l'émetteur et un objet (600) à détecter,
- un récepteur destiné à recevoir le signal de réception (s1') à une sortie de la première liaison de transmission (190a),
- un émetteur de référence destiné à émettre au moins un premier signal de référence (sr) ayant une forme de signal de référence prédéterminée par l'intermédiaire de la liaison de transmission de référence (190r), la liaison de transmission de référence (190r) ayant une fonction de transfert connue,
- un récepteur destiné à recevoir un premier signal de réception de référence (sr') à une sortie de la liaison de transmission de référence (190r), le premier signal d'émission (s1) et le signal de référence (sr) ayant respectivement des composantes de fréquence différentes de zéro, et les fonctions temporelles des signaux (s1, sr) s'additionnent au moins dans une plage temporelle prédéterminée en un signal continu.

3. Capteur d'environnement (500) selon la revendication 1, **caractérisé en ce que** des plages temporelles respectives différentes (T1, T2, T3, T4 ; T5, T6, T7, T8) du signal de somme (a1) peuvent être évaluées pour en déduire la réflexion et/ou l'atténuation et/ou le déphasage du signal d'émission (s1).

4. Capteur d'environnement (500) selon l'une quelconque des revendications précédentes, **caractérisé en ce qu'**il est prévu au moins un ensemble à micro-miroirs (DMD) pouvant être commandé et/ou une séparatrice de faisceaux, afin d'agir sur le chemin de faisceau du signal d'émission (s1) et/ou du signal de réception (s1') et/ou du signal de référence (sr).

5. Capteur d'environnement (500) selon l'une quelconque des revendications précédentes, **caractérisé en ce qu'**il est prévu au moins une optique de focalisation destinée à focaliser le signal d'émission (s1) dans une région spatiale à examiner.

6. Capteur d'environnement (500) selon l'une quelconque des revendications précédentes, **caractérisé par** une diode électroluminescente et/ou une diode lasser (DL) pour générer le signal d'émission (s1) et/ou le signal de référence (sr).

7. Capteur d'environnement (500) selon l'une quelconque des revendications précédentes, **caractérisé en ce qu'**une/la liaison de transmission prévue pour la transmission du signal d'émission (s1) est conçue de telle manière qu'elle comprenne, dans un plan, au moins une, mais de préférence plusieurs plages angulaires qui sont disposées parallèlement à une chaussée ou autre, et/ou sensiblement perpendiculairement à l'horizontale et/ou sensiblement parallèlement à un côté du véhicule et/ou à une porte de véhicule du véhicule à moteur (700a, 700b).

8. Capteur d'environnement (500) selon l'une quelconque des revendications précédentes, **caractérisé en ce qu'**au moins une liaison de transmission prévue pour la transmission du signal démission (s1) est conçue de telle manière qu'elle soit disposée au moins partiellement dans un compartiment intérieur ou de bagages du véhicule à moteur (700a, 700b).

9. Capteur d'environnement (500) selon la revendication 7 ou 8, **caractérisé en ce que** des liaisons de transmission respectives différentes sont prévues pour des plages angulaires différentes.

10. Procédé de mise en fonctionnement d'un capteur d'environnement (500), notamment pour véhicule à moteur (700a, 700b), destiné à détecter des objets, notamment dans l'environnement du véhicule à moteur (700a, 700b), dans lequel au moins un dispositif de détection optique (100) expose une région spatiale prédéterminée à au moins un premier signal d'émission optique (s1), dans lequel une unité dévaluation (130) analyse un premier signal de réception (s1') réfléchi dans la région spatiale, notamment sur une objet à détecter (600), et un signal de référence (sr) devant être émis par l'intermédiaire d'une liaison de transmission de référence (190r), pour déterminer la présence de l'objet (600),
et dans lequel l'analyse comprend les étapes suivantes :
- additionner ou multiplier le premier signal de réception (s1') et une signal de réception de référence (sr') obtenu en sortie de la liaison de transmission de référence pour obtenir un signal de somme (a1),
- évaluer des plages temporelles prédéterminées du signal de somme (a1) pour en déduire une réflexion et/ou une atténuation et/ou un déphasage du signal d'émission (s1) dû à la première liaison de transmission (190a),
- déduire de la réflexion et/ou de l'atténuation et/ou du déphasage une distance (D) et/ou une propriété de l'objet (600),
**caractérisé en ce que** l'évaluation de plages temporelles prédéterminées comprend l'intégration du signal de somme (a1) sur une pluralité de plages temporelles ou l'addition du signal de somme (a1) sur une pluralité de plages temporelles prédéterminées.

11. Procédé selon la revendication 10, **caractérisé en ce que** :
- l'au moins un premier signal optique d'émission (s1) est émis avec une première forme de signal prédéterminée par l'intermédiaire d'une première liaison de transmission (190a), la première liaison de transmission (190a) s'étendant au moins partiellement dans l'espace libre, notamment entre le capteur d'environnement (500) et un objet (600) à détecter,
- le premier signal de réception (s1') est reçu à une sortie de la première liaison de transmission (190a),
- l'au moins un premier signal de référence (sr) est émis avec une forme de signal de référence prédéterminée par l'intermédiaire de la liaison de transmission de référence (190r), la liaison de transmission de référence (190r) ayant une fonction de transfert connue,
- un premier signal de réception de référence (sr') est reçu à une sortie de la liaison de transmission de référence (190r), le premier signal d'émission (s1) et le signal de référence (sr) ayant respectivement des composantes de fréquence différentes de zéro, et les fonctions temporelles des signaux (s1, sr) s'additionnant au moins dans une plage temporelle prédéterminée en un signal continu.

12. Procédé selon la revendication 11, **caractérisé en ce que** le premier signal d'émission (s1) et le signal de référence (sr) sont respectivement un signal de forme sinusoïdale ou de forme rectangulaire et **en ce que** le premier signal d'émission (s1) présente un déphasage prédéterminé, notamment de 180 degrés par rapport au signal de référence (sr).

13. Procédé selon la revendication 10, **caractérisé en ce que** les plages temporelles respectives différentes (T1, T2, T3, T4 ; T5, T6, T7, T8) du signal de somme (a1) sont évaluées pour en déduire la réflexion et/ou l'atténuation et/ou le déphasage du signal d'émission (s1) sur la première liaison de transmission (190a).

14. Procédé selon l'une quelconque des revendications 10 à 13, **caractérisé en ce que** des liaisons de transmission respectives différentes sont utilisées pour des plages angulaires différentes.

15. Procédé selon l'une quelconque des revendications 10 à 14, **caractérisé en ce qu'**on utilise une pluralité de signaux d'émission (s1) ayant des longueurs d'onde différentes.
